# EUROPÄISCHE PATENTSCHRIFT

(11) **EP 2 817 588 B1**
(45) Veröffentlichungstag und Bekanntmachung des Hinweises auf die Patenterteilung: **26.06.2019**
(21) Anmeldenummer: 13711283.5
(22) Anmeldetag: 21.02.2013
(51) Int. Cl.: G01M 99/00, G01S 7/539, G01S 15/10, G01S 15/88, G01N 29/12, G01N 29/07, G01B 17/00

(54) **VERFAHREN UND VORRICHTUNG ZUR BESTIMMUNG VON EIGENSCHAFTEN EINER ROHRLEITUNG, INSBESONDERE DER POSITION EINES ABZWEIGS EINER ABWASSERROHRLEITUNG**
METHOD AND DEVICE FOR DETERMINING PROPERTIES OF A PIPELINE, MORE PARTICULARLY THE POSITION OF A BRANCH IN A WASTE WATER PIPELINE
PROCÉDÉ ET DISPOSITIF POUR LA DÉTERMINATION DE PROPRIÉTÉS D'UNE TUYAUTERIE, EN PARTICULIER DE LA POSITION D'UNE BIFURCATION D'UNE CANALISATION D'EAUX USÉES

(30) Priorität: 22.02.2012 DE 102012101416
(43) Veröffentlichungstag der Anmeldung: 31.12.2014
(73) Patentinhaber: Hochschule Offenburg, 77652 Offenburg (DE)
(72) Erfinder: SCHRÖDER, Werner, 77652 Offenburg (DE)
(74) Vertreter: Eder, Thomas
(86) Internationale Anmeldenummer: PCT/DE2013/100067
(87) Internationale Veröffentlichungsnummer: WO 2013/123939

(56) Entgegenhaltungen:
- WO-A1-89/01130
- JP-A- H0 783 646
- JP-A- H10 132 542
- JP-A- 2002 196 074

## Beschreibung

Die Erfindung betrifft ein Verfahren zur Bestimmung von Eigenschaften einer Rohrleitung, insbesondere der Position eines Abzweigs einer Abwasserrohrleitung sowie eine hierfür geeignete Vorrichtung mit den Merkmalen der Oberbegriffe der Patentansprüche 1 bzw. 10.

Zur Inspektion, Wartung und Sanierung von Kanalsystemen, beispielsweise Abwasserkanalsystemen, finden meist steuerbare, selbstfahrende Roboter Verwendung, die in der Lage sind, die erforderlichen Messvorgänge oder mechanischen Sanierungsarbeiten auszuführen. Die Roboter weisen hierzu meist ein Kamerasystem auf, um den Zustand des Kanals zu visualisieren. Ist beispielsweise ein Abwasserkanal an einer bestimmten Stelle undicht, so kann ein schlauchförmiger Liner eingezogen werden, der beispielsweise epoxidharzgetränkt sein kann und somit schnell aushärtet. Werden solche Liner eingezogen, so ist es erforderlich, mit dem Schlauchliner zunächst verschlossene Kanalabzweigungen, Hausanschlüsse und dergleichen, nach dem Aushärten wieder freizulegen. Hierzu muss selbstverständlich die exakte Position und Abmessung des verschlossenen Abzweigs bekannt sein. Um die Position von Abzweigen vor dem Verschließen mit dem Schlauchliner zu bestimmen, ist es üblich, die Distanz eines Abzweigs zu einem Referenzort mit einer an dem selbstfahrenden Roboter befestigten mechanischen Längenmesseinrichtung zu messen. Hierbei kann es sich im einfachsten Fall um eine Art Maßband handeln.

Eine möglichst exakte Positionsbestimmung ist selbstverständlich nicht nur im Fall des vorstehend geschilderten Sanierungsfalls erforderlich. Vielmehr ist es oftmals wünschenswert, für bestimmte Merkmale innerhalb eines Kanals oder Kanalsystems, bzw. ganz allgemein für eine beliebige Rohrleitung oder ein beliebiges Rohrleitungssystem, die zugehörigen Positionen zu ermitteln. Bei solchen interessierenden Merkmalen kann es sich, neben den bereits genannten Abzweigungen, beispielsweise um Krümmungen, Durchmesserveränderungen oder (ringförmige) Spalte handeln.

Mit Hilfe eines mechanischen Längenmesssystems ist die Bestimmung der zu einem bestimmten Merkmal des Kanalsystems gehörigen Position jedoch aufwändig und fehleranfällig.

Aus der JP 2002 196074 A, der JP H07 83646 A und der JP H10 132542 A ist jeweils eine Vorrichtung zur Untersuchung von Rohren, wie einer Pipeline, bekannt, bei welcher eine akustische Welle in das zu untersuchende Rohr eingekoppelt und das an Störstellen reflektierte Signal detektiert wird. Dabei wird das akustische Signal so erzeugt, dass sich im Rohr eine ebene Welle ausbreitet. Der Vergleich zwischen dem akustischen Sendesignal und dem reflektierten Empfangssignal kann durch Korrelation der beiden Signale erfolgen (JP 2002 196074 A). Da die Schallgeschwindigkeit von der Temperatur abhängt, wird im Stand der Technik vorgeschlagen, die Temperatur mittels eines Temperatursensors zu erfassen und bei der Berechnung des Abstands zwischen der akustischen Messvorrichtung und der betreffenden Störstelle im Rohr zu berücksichtigen (JP H07 83646 A). Aus der WO 89/01130 ist eine andere Vorrichtung bekannt.

Nachteilig ist dabei jedoch, dass bei einer derartigen Korrektur der Schallgeschwindigkeit im Rohr Annahmen über die Zusammensetzung des Mediums im Rohr getroffen werden müssen, die sich als unzutreffend erweisen können.

Der vorliegenden Erfindung liegt daher die Aufgabe zugrunde, ein Verfahren und eine Vorrichtung zu schaffen, wobei zumindest die Position eines interessierenden Merkmals einer Rohrleitung oder eines Rohrleitungssystems mit möglichst einfachen Mitteln möglichst exakt, zuverlässig, schnell und kostengünstig bestimmbar ist.

Die Erfindung löst diese Aufgabe mit den Merkmalen der Patentansprüche 1 bzw. 10.

Die Erfindung geht von der Erkenntnis aus, dass eine Rohrleitung oder ein Rohleitungssystem auf einfache Weise auf bestimmte Eigenschaften hin untersucht werden kann, wenn ein Schallwellensendesignal in die Rohrleitung eingespeist und reflektierte Signalanteile als Schallwellenempfangssignal am Ort der Einspeisung detektiert und ausgewertet werden. Die Auswertung erfolgt dabei unter Berücksichtigung des Schallwellensendesignals hinsichtlich des Vorhandenseins von Schallwellenreflexionen verursachenden Reflexionsorten entlang der Rohrleitung.

An dieser Stelle sei bemerkt, dass in der vorliegenden Beschreibung der Begriff "Rohrleitung" als Synonym sowohl für eine beliebig ausgestaltete Rohrleitung als auch für ein Rohrleitungssystem verwendet wird, welches aus mehreren einzelnen Rohrleitungen bestehen und auch Verzweigungen aufweisen kann.

Erfindungsgemäß weist das Schallwellensendesignal zumindest eine Frequenzkomponente oder einen Spektralbereich auf, dessen maximale Frequenz kleiner ist als die untere Grenzfrequenz der in der Rohrleitung ausbreitungsfähigen ersten Obermode. Denn Spektralkomponenten eines Schallwellensende- oder Empfangssignals, welche in einem Frequenzbereich liegen, in dem nur die Grundmode ausbreitungsfähig ist, weisen eine Schallgeschwindigkeit auf, die im Wesentlichen gleich der Schallgeschwindigkeit einer ebenen Welle im freien Raum (in einem bestimmten Medium) entspricht. Die Signallaufzeit kann somit mit ausreichender Genauigkeit zur Bestimmung der entsprechenden Strecke verwendet werden. Dispersionseffekte spielen bei einem solchen Signal keine Rolle.

Ist der Rohrdurchmesser bekannt, kann zudem die Schallgeschwindigkeit eines Signals aus der Schallgeschwindigkeit einer ebenen Welle berechnet und zur Bestimmung der Strecke aus der gemessenen Signallaufzeit verwendet werden.

Erfindungsgemäß wird aus dem Schallwellenempfangssignal zumindest der Abstand des Reflexionsortes vom Einspeisepunkt ermittelt.

Da die Schallgeschwindigkeit innerhalb eines Mediums von der Dichte und damit auch von der Temperatur des Mediums abhängt, ist es vorteilhaft, wenn die Temperatur des Mediums (beispielsweise Luft) innerhalb der Rohrleitung ermittelt und zur Bestimmung der Schallgeschwindigkeit (einer ebenen Welle oder der tatsächlichen Schallgeschwindigkeit der Grundmode) im betreffenden Medium herangezogen wird.

Die Schallgeschwindigkeit einer ebenen Welle bzw. der Grundmode bei der aktuellen Temperatur und bei Vorhandensein des jeweiligen Mediums innerhalb der Rohrleitung wird erfindungsgemäß direkt unter Verwendung eines Schallwellenmesssignals bestimmt werden, welches eine Frequenz oder ein Frequenzspektrum aufweist, bei dem das Schallwellenmesssignal innerhalb der Rohrleitung mit ausreichender Genauigkeit als ebene Schallwelle behandelt wird, wobei hierzu die Laufzeiten des Schallwellenmesssignals über eine vorbekannte Strecke in beiden Richtungen gemessen wird.

Die so ermittelte Schallgeschwindigkeit einer ebenen Welle bei der tatsächlich innerhalb der Rohrleitung herrschenden Temperatur (diese wird vereinfachend innerhalb der Rohrleitung als konstant vorausgesetzt) kann dann in sehr guter Näherung gleich der Schallgeschwindigkeit der Grundmode bei dieser Temperatur gesetzt werden. Denn die Schallgeschwindigkeit der Grundmode ist unabhängig vom Durchmesser der Rohrleitung und wird nur in relativ geringem Maß durch die Oberflächenbeschaffenheit der Innenwandung der Rohrleitung beeinflusst.

Die so bestimmte Schallgeschwindigkeit kann dann zur Bestimmung des Abstands eines Reflexionsortes entlang der Rohrleitung von dem betreffenden Einspeisepunkt verwendet werden.

Dabei ist es nicht erforderlich, dass die Rohrleitung, beispielsweise ein Abwasserrohr oder -rohrsystem völlig entleert oder freigespült wurde. Denn die Schallgeschwindigkeit der Grundmode ist praktisch unabhängig vom Rohrdurchmesser. Es muss lediglich die Bedingung erfüllt sein, dass im Wesentlichen nur die Grundmode ausbreitungsfähig ist. Es ist bei einem Abwasserrohrleitungssystem also unschädlich, wenn sich streckenweise noch Wasser im Rohr befindet, weil das eigentlich vorgeschriebene Gefälle nicht eingehalten wurde oder weil sich ein Rohrabschnitt gesenkt hat.

Nach einer Ausgestaltung der Erfindung kann als Schallwellensendesignal ein Schallimpuls verwendet werden, der entweder eine feste (Träger-) Frequenz aufweist oder als Chirp-Impuls gestaltet ist, d.h. eine beispielsweise vom Impulsbeginn zum Impulsende hin ansteigende Frequenz aufweist.

Zur Signalauswertung eignen sich beispielsweise Korrelationsverfahren, die eine hohe Empfindlichkeit realisieren können. Insbesondere kann aus Gründen des rechentechnischen Aufwands eine Transformation des Schallwellensendesignals und des gesamten oder eines Teils des Schallwellenempfangssignals in den komplexen Bereich erfolgen, da hier die Berechnung der Korrelationsfunktion bzw. des Faltungsintegrals einfach durch eine Multiplikation erfolgen kann. Nach einer (Rück-) Transformation der Korrelationsfunktion in den Zeitbereich kann die gesamte Signallaufzeit bestehend aus der Laufzeit des Schallwellensendesignals vom Einspeiseort zum betreffenden Reflexionsort und der Laufzeit des Reflexionsteilsignals vom betreffenden Reflexionsort zurück zum Einspeiseort durch die Bestimmung der zeitlichen Lage des zughörigen Maximums der Korrelationsfunktion im Zeitbereich (genauer: des Betrags der komplexen Korrelationsfunktion im Zeitbereich) ermittelt werden.

Wie bereits vorstehend erläutert, kann die Lage des Reflexionsorts dann aus dieser gemessenen und berechneten Laufzeit und der bekannten Schallgeschwindigkeit einer ebenen Welle oder der berechneten Schallgeschwindigkeit der Grundmode in der betreffenden Rohrleitung ermittelt werden.

Nach einer weiteren Ausgestaltung des Verfahrens nach der Erfindung werden ein oder mehrere zeitlich separierbare reflektierte Anteile des Schallwellenempfangssignals mit einem vorbestimmten Zeitintervall aus dem Schallwellenempfangssignal ausgeschnitten und hinsichtlich des zeitlichen Verlaufs und/oder des Frequenzverlauf der Amplitude und/oder des Frequenzverlaufs der Phase oder hinsichtlich der Abweichung des zeitlichen Verlaufs und/oder des Frequenzverlauf der Amplitude und/oder des Frequenzverlaufs der Phase von dem betreffenden Verlauf des Schallwellensendesignals nach dem Auftreten vorbestimmter Merkmale analysiert. Abhängig vom Auftreten eines oder mehrerer vorbestimmter Merkmale kann dann der betreffende Anteil des Schallwellenempfangssignals einer generellen Klasse von Reflexionsorten zugeordnet werden. Als Klassen können beispielsweise die Klassen "Rohrleitungsabzweig", "Änderung des Rohrleitungsdurchmessers", "Krümmung der Rohrleitung" oder "Hindernis innerhalb der Rohrleitung" definiert werden.

Nach einer Ausführungsform der Erfindung können durch die Klassifizierung, zusätzlich zur generellen Klasse (d.h. dem generellen Typ des Reflexionsortes), aus dem einen oder mehreren vorbestimmten Merkmalen quantitative Informationen für einen Reflexionsort ermittelt werden, wie der Durchmesser eines Rohrleitungsabzweigs, der Wert der absoluten oder relativen Vergrößerung oder Verringerung des Durchmessers der Rohrleitung, der Winkel der Krümmung der Rohrleitung oder die Art und/oder Größe des Hindernisses innerhalb der Rohrleitung.

Die Schallgeschwindigkeit c kann dabei nach der Beziehung c = L/2·(t₂ + t₁)/(t₁·t₂) berechnet werden, wobei mit t₁ die gemessene Laufzeit entlang der Strecke L in der Hinrichtung und mit t₂ die gemessene Laufzeit entlang der Strecke L in der Rückrichtung bezeichnet sind.

Nach einer weiteren Ausgestaltung der Erfindung kann die vorbekannte Strecke zur Messung der Schallgeschwindigkeit c einer ebenen Welle innerhalb der Rohrleitung parallel zur Achse der Rohrleitung verlaufen, vorzugsweise in oder nahe der Achse der Rohrleitung liegen. Dies gibt die Möglichkeit auch die Geschwindigkeit v des Mediums innerhalb der Rohrleitung (z.B. die Windgeschwindigkeit innerhalb eines Abwasserkanals) zu ermitteln. Diese lässt sich ebenfalls aus den gemessenen Laufzeiten t₁ und t₂ nach der Beziehung v = L/2·(t₂ - t₁)/(t₁·t₂) bestimmen. Die Geschwindigkeit v kann dann ebenfalls bei der Berechnung der Position eines Reflexionsortes berücksichtigt werden, wobei sich für einen Abstand I_{R} eines Reflexionsortes vom Einspeisepunkt für das Schallwellensendesignal bzw. Detektionspunkt für das Schallwellenempfangssignal die Beziehung I_{R} = t_{g}·(c² - v²)/(2·c) ergibt. Dabei ist mit t_{g} die ermittelte Gesamtlaufzeit bezeichnet.

Damit kann die Position eines Reflexionsortes hochgenau bestimmt werden, da die Schallgeschwindigkeit des Schallwellensendesignals (in der Grundmode) sowohl hinsichtlich der Temperatur als auch hinsichtlich der Geschwindigkeit des Mediums in der Rohrleitung korrigiert werden kann.

Ergibt sich für die so bestimmte Schallgeschwindigkeit ein Wert, der erkennen lässt, dass das im Rohr vermutete Medium hierzu eine Temperatur haben müsste, die offensichtlich nicht der Realität entspricht, so kann hieraus geschlossen werden, dass nicht das angenommen Medium, beispielsweise Luft, vorhanden ist. Dies kann bei Abwasserkanälen beispielsweise durch die Anwesenheit von Faulgasen verursacht sein. In einem solchen Fall kann die erfindungsgemäße Messeinrichtung (insbesondere die Steuer- und Auswerteeinheit) ein Fehlersignal oder einen Fehlerhinweis erzeugen, der beispielsweise in einer "Freiblaswarnung" bestehen kann, d.h., die Rohrleitung sollte mittels eines Lüfters von schädlichen Gasen durchgeblasen werden. Anschließend befindet sich dann ein vorbekanntes Medium in der Rohrleitung, so dass das erfindungsgemäße Messverfahren mit hoher Genauigkeit angewandt werden kann.

Wie vorstehend erläutert, kann der Innendurchmesser der Rohrleitung zur möglichst exakten Ermittlung der Geschwindigkeit der Grundmode herangezogen werden. Des Weiteren ist der Durchmesser jedoch auch maßgebend für die untere Grenzfrequenz der ersten Obermode. Damit kann abhängig vom Durchmesser die Frequenz bzw. das Frequenzspektrum des Schallwellensendesignals gewählt werden, beispielsweise derart, dass sich immer dasselbe, auf die Grenzfrequenz normierte Sendefrequenz bzw. dasselbe auf die Grenzfrequenz normierte Sendespektrum ergibt.

Darüber hinaus kann der Rohrdurchmesser auch verwendet werden, um eine auf die Grenzfrequenz der ersten Obermode normierte Darstellung des Schallwellenempfangssignals bzw. der Frequenzverläufe von Signalanteilen des reflektierten Signals oder von Signalanteilen des mit dem Schallwellensendesignal korrelierten Schallwellenempfangssignals zu erhalten. Damit lässt sich, wie vorstehend erläutert, eine einfache Klassifizierung von Reflexionsursachen bzw. Reflexionsorten erreichen.

Der Innendurchmesser der Rohrleitung kann nach einer Ausgestaltung der Erfindung durch Abstandsmessungen in wenigstens drei radialen Erfassungsrichtungen mittels Schallsignalen ermittelt werden. Die Schallsignale werden von jeweils einem Ort innerhalb der Rohrleitung in radialer Richtung ausgesandt und von der Innenwandung der Rohrleitung reflektiert. Dabei wird jeweils die Laufzeit zwischen dem Senden des Schallsignals und dem Empfangen eines zugehörigen, an der Innenwandung der Rohrleitung reflektierten Schallsignals bestimmt. Die Laufzeit kann dabei direkt durch das Senden und Empfangen eines pulsartigen Schallsignals mit sehr kleiner Impulsbreite und das Messen der Zeitdifferenz zwischen dem Senden und Empfangen (ggf. auch unter Verwendung der vorstehend erläuterten Korrelationsmethode) bestimmt werden. Alternativ kann jeweils ein Schallsignal gesendet werden, dessen zeitliche Länge größer ist als die gesamte Laufzeit zwischen dem Senden des Schallsignals und dem Empfangen des betreffenden reflektierten Schallsignals. Abhängig von der Frequenz des Signals kann dann durch eine Messung der Phasenverschiebung zwischen dem gesendeten und empfangenen Signal die gesamte Laufzeit ermittelt werden. Wird für die Abstandsmessung ein Schallsignal verwendet, dessen Wellenlänge klein ist gegen den Rohrdurchmesser (beispielsweise kleiner als 1/10 des Durchmessers), so liefert die Auswertung der Phase bei geringerem messtechnischem Aufwand eine hohe Genauigkeit.

Als Schallsender und/oder Schallsensoren können beispielsweise Piezo-Ultraschallwandler verwendet werden, die sowohl als Schallgeber als auch als Schallsensoren fungieren können. Derartige Piezo-Ultraschallgeber/Sensoren sind kostengünstig verfügbar und können Ultraschall mit Frequenzen bis über 100 kHz erzeugen.

Derartige Ultraschallsender bzw. Ultraschallsensoren weisen üblicherweise eine keulenförmige Charakteristik auf, die beispielsweise noch in einem Winkel von ±30° gegenüber der Achse einen Empfindlichkeitsabfall bzw. Strahlungsleistungsabfall von weniger als 3dB aufweisen. Die Ultraschallsender bzw. Ultraschallsensoren werden so ausgerichtet, dass die Achse der Strahlungskeule senkrecht zur Längsachse der Rohrleitung verläuft. Da selbst bei einer außermittigen Anordnung eines Ultraschallsenders (d.h. die Achse der Keule schneidet nicht die Längsachse der Rohrleitung) diejenigen Sendesignalanteile am meisten zum empfangenen reflektierten Signal beitragen, die entlang einer Achse gesendet werden, welche durch die Längsachse der Rohrleitung (und senkrecht hierzu) und die (Mitten-) Position des Ultraschallsenders verläuft (andere Anteile werden schräg reflektiert), wird somit jeweils der kleinste Abstand zwischen dem jeweiligen Ultraschallsender und der Innenwandung der Rohrleitung gemessen. Der Rohrdurchmesser kann aus diesen Tripeln bzw. n-Tupeln von Messwerten dadurch bestimmt werden, dass für jede mögliche Position der Messanordnung (mit festgelegten Positionen der Paare von Schallsendern und -sensoren) innerhalb einer Rohrleitung mit gegebenem Durchmesser jeweils ein Referenztripel bzw. n-Tupel ermittelt wird. Dies ergibt eine zweidimensionale Fläche in einem dreidimensionalen bzw. n-dimensionalen Vektorraum. Selbstverständlich kann die Fläche auch mittels einer ausgewählten Anzahl von Stützwerten festgelegt werden. Andere Punkte auf der Fläche können dann durch eine analytische Beschreibung der Fläche oder durch Interpolationsverfahren ermittelt werden.

Da sich für jeden Rohrdurchmesser eine separate Fläche ergibt, kann durch einen Vergleich eines gemessenen Tripels bzw. n-Tupels mit einer bekannten, vorzugsweise vorab ermittelten Fläche der zugehörige Rohrdurchmesser bestimmt werden.

In der Praxis sind häufig gestufte bzw. genormte Innendurchmesser relevant. So sind für die Hauskanalisation Rohre von 100 mm oder 200 mm üblich. Dies erleichtert die Bestimmung des Innendurchmessers, da anstelle einer exakten Durchmesserbestimmung nur noch eine Zuordnung zu vorgegebenen diskreten Durchmesserwerten erfolgen muss. Ergäbe in einem solchen Fall die messtechnische Bestimmung einen Durchmesser, der von allen vorgegebenen diskreten Werten abweicht, so kann beispielsweise der nächstliegende diskrete Wert als korrekter Wert angenommen werden. An dieser Stelle sei darauf hingewiesen, dass die vorstehend erläuterte Bestimmung des Durchmessers einer Rohrleitung auch unabhängig von den Merkmalen der Patentansprüche 1 oder 11 eingesetzt werden kann, d.h. losgelöst von der Bestimmung von Eigenschaften einer Rohrleitung durch das axiale Einkoppeln von Schallsignalen in die Rohrleitung und das Auswerten von reflektierten Signalanteilen.

Weitere Ausgestaltungen der Erfindung ergeben sich aus den Unteransprüchen.

Die Erfindung wird nachfolgend anhand eines in der Zeichnung dargestellten Ausführungsbeispiels näher erläutert.

In der Zeichnung zeigen:
- Fig. 1: eine schematische Darstellung eines Rohrleitungssystems mit einem Abzweig und einer Krümmung und einer Vorrichtung zur Bestimmung von Eigenschaften einer Rohrleitung nach der Erfindung zur Erläuterung des erfindungsgemäßen Verfahrens, wobei das Rohrleitungssystem von einem Punkt des Rohrleitungssystems aus untersucht wird;
- Fig. 2: eine schematische Darstellung eines weiteren Rohrleitungssystems mit drei Abzweigen zur Erläuterung des Verfahrens zur Bestimmung von Eigenschaften einer Rohrleitung nach der Erfindung, wobei das Rohrleitungssystem von gegenüberliegenden Punkten aus untersucht wird;
- Fig. 3: eine Darstellung eines Schallwellensendesignals in Form eines Chirp-Impulses (normierte Amplitude des Schalldrucks als Funktion der Zeit);
- Fig. 4: eine Darstellung eines detektierten Schallwellenempfangssignals (normierte Amplitude des Schalldrucks als Funktion der Zeit), das sich im Fall eines nicht näher dargestellten Rohrleitungssystems bei Verwendung des Chirp-Impulses nach Fig. 3 ergibt;
- Fig. 5: eine Darstellung des Betrags der Korrelationsfunktion (normierte Amplitude als Funktion des Abstands vom Einspeisepunkt bzw. Empfangspunkt) aus dem Schallwellensendesignal nach Fig. 3 und dem Schallwellenempfangssignal nach Fig. 4;
- Fig. 6: verschiedene, beispielhafte Verläufe für von Spektren (Amplitude als Funktion der normierten Frequenz f/f_{c}; f_{c} ist die untere Grenzfrequenz der ersten Obermode) von Ausschnitten aus einem korrelierten Signal ähnlich Fig. 5;
- Fig. 7: eine schematische Seitenansicht einer Vorrichtung nach der Erfindung zur Bestimmung von Eigenschaften einer Rohrleitung, welche die Erfassung eines in einer Rohrleitung reflektierten Schallwellensignals sowie die Messung der Schallgeschwindigkeit und der Geschwindigkeit des Mediums in der Rohrleitung und die Messung des Innendurchmessers der Rohrleitung ermöglicht; und
- Fig. 8: eine schematische Vorderansicht der Vorrichtung nach Fig. 7.

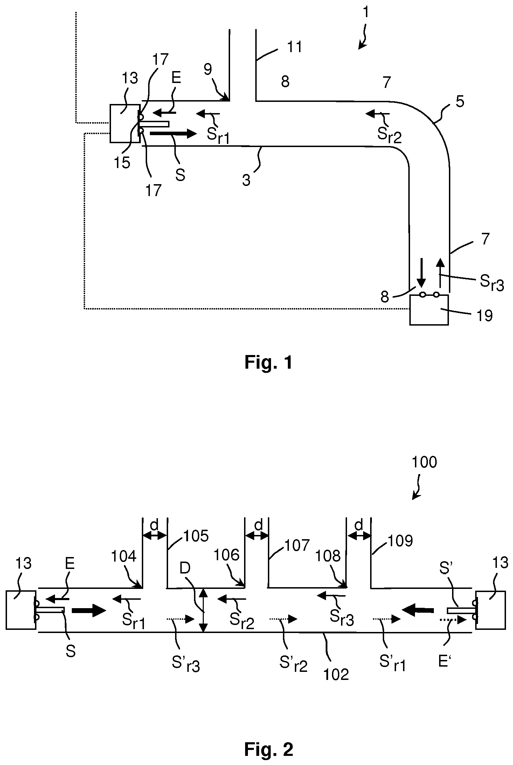

Fig. 1 zeigt eine schematische Darstellung eines Rohrleitungssystems 1 beziehungsweise einen Ausschnitt eines komplexeren Rohrleitungssystems, wobei der in Fig. 1 dargestellte Ausschnitt einen ersten geraden Abschnitt 3, einen Krümmungsabschnitt 5, welcher einen Krümmungswinkel von 90° aufweist, und einen zweiten geraden Abschnitt 7 umfasst. Im mittleren Bereich des ersten geraden Abschnitts 3 ist ein Abzweig 9 vorgesehen. Der Innendurchmesser D der Hauptrohrleitung mit den geraden Abschnitten 3, 7 und dem Krümmungsabschnitt 5 weist einen Durchmesser D auf, der größer ist, beispielsweise doppelt so groß, wie der Innendurchmesser d der abzweigenden Rohrleitung 11. Das Ende des zweiten geraden Abschnitts 7 der Hauptrohrleitung ist offen. Insgesamt kann das dargestellte Rohrleitungssystem 1 beziehungsweise der betreffende Ausschnitt beispielsweise Teil eines Abwasserrohrleitungssystems sein, beispielsweise innerhalb eines Gebäudes oder in einem Hausanschlussbereich. Typische Rohrdurchmesser liegen hierbei im Bereich von 100 mm bis 400 mm.

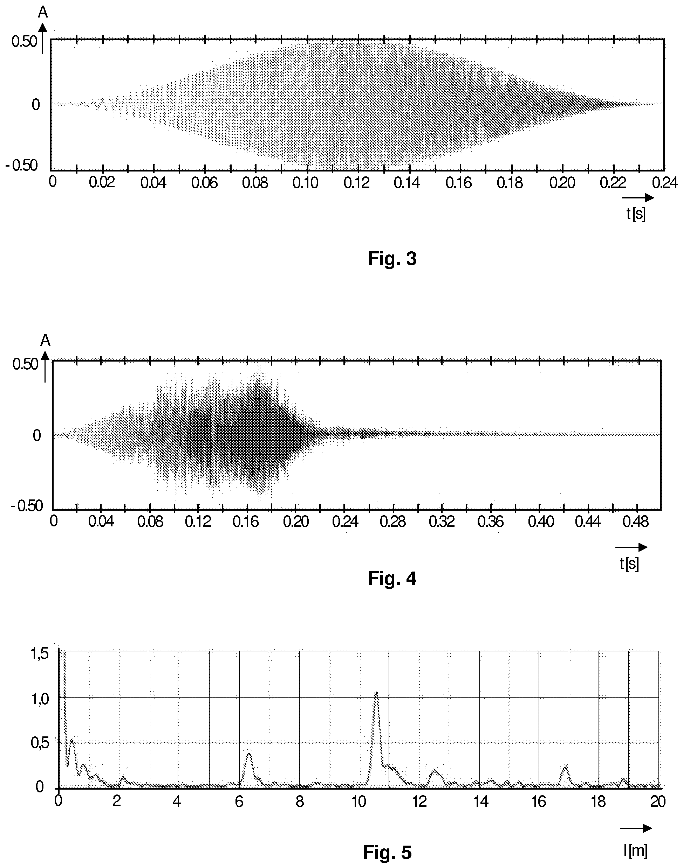

Um bestimmte Eigenschaften eines derartigen Rohrleitungssystems 1 möglichst einfach, schnell und kostengünstig zu bestimmen, wird mittels einer Vorrichtung zur Bestimmung von Eigenschaften einer Rohrleitung 13 ein Schallwellensendesignal S in das Rohrleitungssystem 1 eingekoppelt. Hierzu ist, wie in Fig. 1 dargestellt, die Vorrichtung 13 vor eine Öffnung der Rohrleitung, hier die Öffnung des ersten geraden Abschnitts 3, positioniert. In der Praxis kann die Vorrichtung 13 selbstverständlich an einer beliebigen, zugänglichen Stelle des Rohrleitungssystems so in das Rohrleitungssystem eingebracht werden, dass das Schallwellensendesignal S im Wesentlichen in der Achse der betreffenden Rohrleitung beziehungsweise des betreffenden Rohrleitungsabschnitts in das Rohrleitungssystem 1 eingekoppelt wird. Die Vorrichtung 13 muss hierzu selbstverständlich eine geeignete Größe aufweisen. Das Schallwellensendesignal kann, wie in Fig. 3 dargestellt, als zeitlich kurzer Schallimpuls von beispielsweise ca. 0,2 s ausgebildet sein. Da bestimmte Eigenschaften des Rohrleitungssystems hinsichtlich Dämpfung oder Phasenverschiebung unterschiedlich auf unterschiedliche Frequenzen bzw. Spektralanteile des Schallwellensendesignals S wirken, ist es vorteilhaft, wenn das Schallwellensendesignal nicht nur eine feste Trägerfrequenz aufweist, die in zeitlicher Hinsicht amplitudenmoduliert ist, sondern ein geeignetes Frequenzspektrum umfasst. Hierzu kann, wie in Fig. 3 dargestellt, ein Schallwellensendesignal S in Form eines Chirp-Impulses ausgebildet sein, der zu Beginn eine relativ niedrige Frequenz aufweist, die zum Ende des Impulses hin ansteigt, beispielsweise linear oder exponentiell. Die Hüllkurve entsprechend der (normierten) Amplitude A kann ebenfalls in einer geeigneten Form gewählt werden und beispielsweise durch die Verwendung eines entsprechenden Filters im elektrischen Signalpfad, der zur Ansteuerung des Schallwandlers dient, festgelegt sein.

Die Frequenz oder das Frequenzspektrum des Schallwellensendesignals S wird so gewählt, dass die einzige Trägerfrequenz oder der überwiegende Anteil des Frequenzspektrums eines spektral breiteren Schallwellensendesignals S, wie eines Chirp-Impulses nach Fig. 3, unterhalb der unteren Grenzfrequenz f_{c} der ersten Obermode liegt, die in der Rohrleitung ausbreitungsfähig ist. Da man üblicherweise das Schallwellensendesignal S in eine Hauptrohrleitung mit einem über einen längeren Bereich konstanten Durchmesser einkoppeln wird, kann die Frequenz beziehungsweise das Frequenzspektrum des Schallwellensendesignals S an diesen Bereich des Rohrleitungssystems angepasst werden.

Soll beispielsweise ein Rohrsystem untersucht werden, welches überwiegend einen Durchmesser von 200 mm aufweist, so ergibt sich für die untere Grenzfrequenz der ersten Obermode ein Wert von f_{c} = 0,586.c/D ≈ 1 kHz. Dementsprechend kann der in Fig. 3 dargestellte Chirp-Impuls in diesem Fall ein Frequenzspektrum von ca. 50 Hz bis 1 kHz aufweisen.

Soll ein Rohrleitungssystem mit größerem Durchmesser D untersucht werden, beispielsweise ein Rohrleitungssystem mit einem Durchmesser von D = 100 mm, so sollte ein geeigneter Chirp-Impuls zumindest mit dem überwiegenden Teil seines Spektrums unterhalb der kleineren Grenzfrequenz von ca. 2 kHz Hz liegen.

Die Vorrichtung 13 weist zum Erzeugen des Schallwellensendesignals S einen Schallwandler 15, beispielsweise in Form eines Lautsprechers, auf, der ein elektrisches Treibersignal mit den gewünschten Eigenschaften in das gewünschte Schallwellensendesignal S umwandelt.

Da das Schallwellensendesignal S eine Frequenz bzw. ein Frequenzspektrum aufweist, welches ausschließlich beziehungsweise überwiegend unterhalb der unteren Grenzfrequenz f_{c} der ersten im Rohrleitungssystem 1 ausbreitungsfähigen Obermode liegt, wird die Leistung des Schallwellensendesignals innerhalb der Rohrleitung überwiegend in der Grundmode geführt. Signalanteile, die bei der Einkopplung in die Rohrleitung Obermoden anregen, werden so stark gedämpft, dass sie bereits nach einer kurzen Strecke abgeklungen sind.

Da die akustische Grundmode in der Rohrleitung nahezu exakt die Schallgeschwindigkeit des freien Raums aufweist und unabhängig vom Material der Rohrwandung ist, kann das entsprechende Schallsignal dazu verwendet werden, um ausgehend von der Signallaufzeit mit hoher Genauigkeit eine bestimmte Position innerhalb der Rohrleitung zu bestimmen. Denn die Schallgeschwindigkeit c der Grundmode beziehungsweise der ebenen Welle ist in Abhängigkeit vom Medium bzw. der Zusammensetzung des Mediums und der Temperatur beziehungsweise der Dichte des Mediums mit hoher Genauigkeit bekannt. Beispielsweise beträgt die Schallgeschwindigkeit c einer ebenen Welle in Luft bei einer Temperatur von 20°C ca. 343 m/s.

Um die Signallaufzeit in einer Rohrleitung bzw. einem Abschnitt eines Rohrleitungssystems 1 zuverlässig zu messen, sollte dieses homogen mit einem Medium, beispielsweises Luft, gefüllt sein. Soll beispielsweise ein Abwasserrohrleitungssystem innerhalb eines Gebäudes oder im Hausanschlussbereich untersucht werden, so sollte die Rohrleistung abgesperrt und möglichst entleert werden. Auf diese Weise können Verfälschungen des Messergebnisses durch teilweise mit Abwasser gefüllte Rohrleitungsbereiche vermieden werden.

Wie in Fig. 1 dargestellt, verursachen bestimmte Merkmale innerhalb des Rohrleitungssystems 1 Reflexionen, so dass reflektierte Anteile des Schallwellensendesignals S in Richtung auf die Vorrichtung 13 zurückgeführt werden. Insbesondere erzeugen der Abzweig 9, der Krümmungsbereich 5 und das offene Ende 8 des zweiten geraden Abschnitts 7 des Rohrleitungssystems 1 reflektierte Signale, die mit Sᵣ₁, Sᵣ₂, Sᵣ₃ bezeichnet sind.

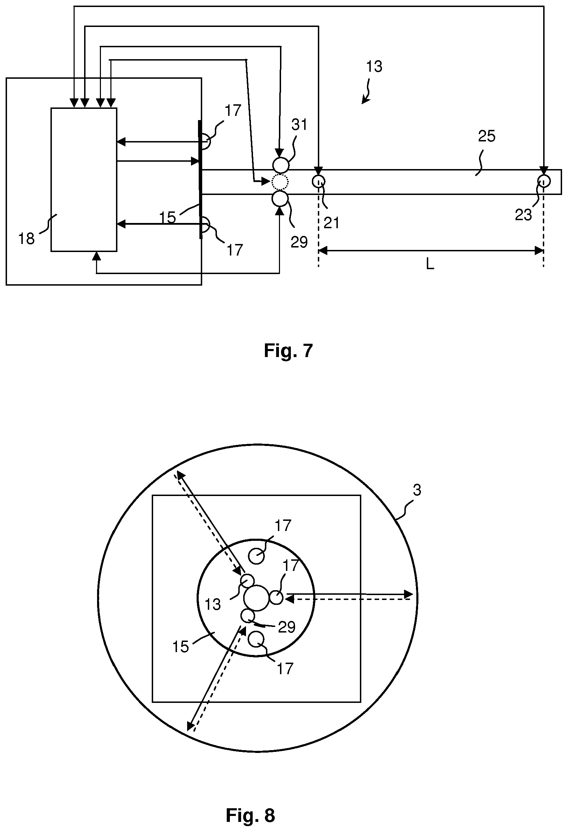

Diese Signalanteile werden am Einspeiseort, das heißt am Ort der Vorrichtung 13, mittels wenigstens eines Schallwandlers 17 erfasst (beispielsweise in Form eines Mikrofons), der Teil der Vorrichtung 13 ist. Die Schallwandler wandeln das detektierte Schallwellenempfangssignal E, welches durch die reflektierten Signalanteile Sᵣ₁, Sᵣ₂, Sᵣ₃ am Einspeise- beziehungsweise Empfangsort gebildet sind, in ein elektrisches Signal um, welches dann einer Steuer- und Auswerteeinheit 18 der Vorrichtung 13 zugeführt wird (Fig. 7).

An dieser Stelle sei bemerkt, dass für die Erzeugung des Schallwellensendesignals S und den Empfang der reflektierten Signalanteile Sᵣ₁, Sᵣ₂, Sᵣ₃ selbstverständlich ebenfalls eine komplexere, nicht dargestellte Schallwellensendeeinheit und eine komplexere Schallwellenempfangseinheit vorgesehen sein können, die Teil der Vorrichtung 13 sind. Die Schallwellensendeeinheit umfasst dabei den Schallwandler beziehungsweise Lautsprecher 15 und eine entsprechende elektronische Ansteuereinheit, beispielsweise zur Erzeugung eines elektrischen Chirp-Impulses, der vom Schallwandler 15 in den akustischen Chirp-Impuls gewandelt wird. Die Schallwellensendeeinheit kann (zumindest teilweise) in die Steuer- und Auswerteeinheit 18 integriert sein.

Die Schallwellenempfangseinheit umfasst den wenigstens einen Schallwandler 17 und kann zudem eine komplexere, nicht dargestellte Signalverarbeitungseinheit umfassen, insbesondere eine A/D-Wandlereinheit, welche das analoge elektrische Signal, welches von dem wenigstens einen Mikrofon 17 geliefert wird, mit einer vorbestimmten Abtastrate abtastet und in ein digitales Signal wandelt, welches dann der Steuer- und Auswerteeinheit 18 zur weiteren Verarbeitung zugeführt wird. Auch die Schallwellenempfangseinheit kann (zumindest teilweise, beispielsweise bis auf die Schallwandler 17) ebenfalls in die Steuer- und Auswerteeinheit 18 integriert sein.

Die Abtastrate für das Erfassen der reflektierten Signalanteile ist dabei so zu wählen, dass auch die Spektralanteile des durch die reflektierten Signalanteile Sᵣ₁, Sᵣ₂, Sᵣ₃ gebildeten Schallwellenempfangssignals E noch vollständig erfasst werden. Hierzu muss insbesondere das Abtasttheorem erfüllt sein, das heißt, die Abtastfrequenz für das Schallwellenempfangssignal muss doppelt so groß sein wie die maximale Frequenz des Schallwellensendesignals beziehungsweise doppelt so groß wie diejenige Frequenz des Schallwellenempfangssignals, die von der Schallwellenempfangseinheit noch aufgelöst werden soll. Aus dem Schallwellenempfangssignal E kann die Steuer- und Auswerteeinheit 18 dann mittels eines geeigneten Auswertverfahrens zumindest den Abstand eines Reflexionsortes ermitteln, welcher den zugehörigen reflektierten Signalanteil Sᵣ₁, Sᵣ₂ oder Sᵣ₃ verursacht hat. Hierzu kann die Steuer- und Auswerteeinheit 18 die gesamte Laufzeit t_{g} bestehend aus der Laufzeit t₁ des Schallwellensendesignals S vom Einspeiseort zu dem betreffenden Reflexionsort und die Laufzeit t₂ des reflektierten Signalanteils vom Reflexionsort zurück zum Einspeiseort beziehungsweise Empfangsort bestimmen. Mit der Schallgeschwindigkeit, die gegebenenfalls unter Berücksichtigung des Rohrdurchmessers und der Temperatur korrigiert werden muss, kann dann der Abstand des Reflexionsortes berechnet werden.

Zudem ist es möglich, wie nachstehend erläutert wird, nicht nur den Abstand eines Reflexionsorts, sondern auch die Art und gegebenenfalls weitere Merkmale des Reflexionsortes beziehungsweise der Reflexionsursache zu ermitteln.

Wie in Fig. 1 schematisch dargestellt, ist es selbstverständlich auch möglich, am offenen Rohrleitungsende eine weitere Schallwellenempfangseinheit 19 zu positionieren, deren Empfangssignal dann ebenfalls der Vorrichtung 13 beziehungsweise deren Steuer- und Auswerteeinheit 18 zugeführt wird. Dies kann entweder kabelgebunden oder drahtlos erfolgen. Auf diese Weise kann die Vorrichtung 13 bzw. die Steuer- und Auswerteeinheit 18 auf einfache Weise die Länge der Rohrleitung 1 zwischen dem Einspeiseort und der Position der weiteren Schallwellenempfangseinheit 19 bestimmen. Die Länge ergibt sich dabei wiederum aus der gemessenen Laufzeit zwischen dem Schallwellensendesignal S und dem mittels der Schallwellenempfangseinheit 19 detektierten Empfangssignal und der Schallgeschwindigkeit c (diese wiederum korrigiert durch eine Berücksichtigung des Rohrdurchmessers und der Temperatur, falls erforderlich).

In gleicher Weise kann das transmittierte Signal auch von einer innerhalb der Rohrleitung 1 beweglichen Schallwellenempfangseinheit 19 empfangen werden, wobei eine derartige Schallwellenempfangseinheit beispielsweise auf einem selbstfahrenden Roboter vorgesehen sein kann. Diese Schallwellenempfangseinheit kann dann auch über eine Auswerteeinheit verfügen, die aus einem ihr über ein Kabel oder drahtlos zugeführten elektrischen Signal, und dem detektierten Schallsignal die Laufzeit des akustischen Signals und hieraus aktuelle Position der Schallwellenempfangseinheit innerhalb der Rohrleitung 1 ermittelt. Diese Auswertung kann genauso erfolgen, wie vorstehend bzw. auch weiter unten beschrieben, wobei hier selbstverständlich nur eine Signalstrecke (vom Einspeiseort bis zur aktuellen Position der Schallwellenempfangseinheit) zu berücksichtigen ist.

Fig. 2 zeigt eine ähnliche Anordnung wie Fig. 1, wobei das Rohrleitungssystem 100 in diesem Fall lediglich eine gerade Hauptleitung 102 aufweist, von welcher drei Abzweige 104, 106, 108 abzweigen. Der Durchmesser der Hauptleitung 102 ist wiederum mit D gekennzeichnet. Die Durchmesser der abzweigenden Leitungen 105, 107, 109 der Abzweige 104, 106, 108 sind mit d bezeichnet. Im dargestellten Beispiel beträgt der Durchmesser d in etwa die Hälfte des Durchmessers D der Hauptleitung 102.

Wie in Fig. 2 dargestellt, kann mittels einer oder zweier unterschiedlicher Vorrichtungen 13 das Rohrleitungssystem 100 von beiden Seiten aus untersucht werden. Die in Fig. 2 links dargestellte Vorrichtung 13 koppelt das Schallwellensendesignal S an der Einspeiseposition am linken Rohrleitungsende in das Rohrleitungssystem 100 ein. Die Abzweige 104, 106, 108 erzeugen die reflektierten Signalanteile Sᵣ₁, Sᵣ₂, Sᵣ₃. Diese werden von in Fig. 2 links dargestellten Vorrichtung 13 an der Einspeiseposition als Schallwellenempfangssignal E detektiert.

In gleicher Weise koppelt die in Fig. 2 rechts dargestellte Vorrichtung 13 das Schallwellensendesignal S' an der Einspeiseposition am rechten Rohrleitungsende in das Rohrleitungssystem 100 ein. Die Abzweige 104, 106, 108 erzeugen die reflektierten Signalanteile S'ᵣ₃, S'ᵣ₂ und S'ᵣ₁. Diese werden von in Fig. 2 links dargestellten Vorrichtung 13 an der Einspeiseposition als Schallwellenempfangssignal E detektiert.

Die beiden Messungen mittels der beiden oder der einzigen Vorrichtung 13 erfolgen selbstverständlich zeitlich nacheinander, um eine gegenseitige Beeinflussung zu vermeiden. Die Messung und Auswertung erfolgt in gleicher Weise, wie zuvor in Verbindung mit der Ausführungsform gemäß Fig. 1 beschrieben. Mit etwas mehr Aufwand lässt sich jedoch auch eine gleichzeitige Messung realisieren, beispielsweise durch die Verwendung von orthogonal modulierten Sendesignalen, die dann beim Detektieren voneinander getrennt werden können.

Durch die Messung von beiden Seiten ergibt sich der Vorteil, dass von der jeweiligen Einspeisestelle weiter entfernt liegende Reflexionsorte mit höherer Genauigkeit erfasst werden können, wenn die beiden Messergebnisse "übereinandergelegt" werden, wobei hierzu selbstverständlich eines der Messergebnisse beziehungsweise Auswertungsergebnisse "gespiegelt" werden muss (das heißt es gilt dann beispielsweise für eine "Spiegelung des Schallwellenempfangssignals E': E'(t_{lg}-t_{g}) = E(t_{g}), wenn t_{lg} die gesamte Signallaufzeit hin und zurück über die gesamte Länge l_{g} der Hauptleitung 102 bezeichnet). Als Maß für die korrekte Signallaufzeit t_{g} kann das genaue Aufeinanderpassen des ausgewerteten Reflexionssignals von der einen Seite und des ausgewerteten und gespiegelten Reflexionssignals von der anderen Seite dienen.

Nachfolgend wird das Verfahren zur Auswertung des Schallwellenempfangssignals, welches die reflektierten Signalanteile umfasst, näher erläutert.

Wie bereits vorstehend erläutert, wird mittels der Vorrichtung 13 ein Schallwellensendesignal S, wie es beispielsweise in Fig. 3 in Form eines Chirp-Impulses dargestellt ist, an einer Einspeiseposition in das betreffende Rohrleitungssystem 1, 100 eingespeist. Das durch die reflektierten Signalanteile Sᵣ₁, Sᵣ₂, Sᵣ₃ beziehungsweise S'ᵣ₁, S'ᵣ₂, S'ᵣ₃ erzeugte Schallwellenempfangssignal E wird am Einspeiseort, der gleichzeitig Detektionsort ist, von der Vorrichtung 13 empfangen und ausgewertet. Die von der Vorrichtung 13 umfasste Schallwellenempfangseinheit umfasst wenigstens einen Schallwandler, beziehungsweise ein Mikrofon 17, zur Erzeugung eines elektrischen Empfangssignals, welches anschließend analog/digital gewandelt wird. Ein derartiges beispielhaftes Schallwellenempfangssignal E zeigt Fig. 4.

Anstelle eines einzigen Schallwandlers 17 können auch mehrere Schallwandler vorgesehen sein (beispielsweise zwei Schallwandler wie in den Fig. 1 und 2 dargestellt), die so angeordnet sind, dass sie in einer Querschnittsebene liegen, in welcher das Schalldruckfeld der ersten oder höherer Obermoden unterschiedliche Vorzeichen aufweisen. Durch die vorzeichenrichtige Überlagerung der betreffenden (elektrischen) Schallwellenempfangssignale kann dann der Empfang höherer Moden unterdrückt werden, die eventuell an den Reflexionsorten angeregt und in Form der reflektierten Signalanteile zum Detektionsort zurückgeführt werden. Auf diese Weise wird der Einfluss der Dispersion (die Obermoden weisen nicht mehr die Schallgeschwindigkeit der Grundmode auf) bei der Bestimmung der Signallaufzeiten und der reflektierten Anteile und damit bei der Bestimmung des Abstands des betreffenden Reflexionsorts vom Einspeiseort vermieden.

Das so ermittelte elektrische Schallwellenempfangssignal (vgl. Fig. 4) wird, wie vorstehend erläutert, mit dem (elektrischen) Schallwellensendesignal korreliert, d.h., es wird die Kreuzkorrelationsfunktion berechnet. Hierzu können selbstverständlich das (elektrische) Schallwellensendesignal S beziehungsweise das elektrische Ansteuersignal für die Schallwellensendeeinheit mit dem Schallwandler 15 und das Schallwellenempfangssignal E in digitaler Form vorliegen.

Die Berechnung der Korrelation kann entweder im Zeitbereich oder durch die Transformation des (elektrischen) Schallwellensendesignals mit dem (elektrischen) Schallwellenempfangssignal in den Frequenzbereich und entsprechender Rücktransformation erfolgen. Die Grundprinzipien einer derartigen Signalverarbeitung sind bekannt und müssen daher an dieser Stelle nicht näher erläutert werden. Bei der Berechnung kann auch die gesamte Übertragungsfunktion von im Signalpfad liegenden Einheiten berücksichtigt werden, insbesondere die (Teil-) Übertragungsfunktionen der Schallwandler und der betreffenden elektrischen Ansteuereinheiten und ggf. elektrischen Filtereinheiten.

Fig. 5 zeigt das Ergebnis einer derartigen Korrelation, wobei die dargestellte Kurve der Betrag der in den Zeitbereich rücktransformierten Korrelationsfunktion ist (die rücktransformierte Korrelationsfunktion kann ebenfalls eine komplexe Funktion im Zeitbereich sein). Der Betrag der zeitlichen Korrelationsfunktion ist hier bereits als Funktion des Abstands vom Einspeise- beziehungsweise Detektionsort aufgetragen. Der Abstand kann dabei durch die Verwendung einer gegebenenfalls korrigierten Schallgeschwindigkeit aus der Signallaufzeit ermittelt werden. Die Rücktransformation kann mit bekannten Methoden erfolgen, beispielsweise durch Wiener-Entfaltung.

Die in Fig. 5 dargestellte Kurve des Betrags des korrelierten Signals (genauer: der in den Zeitbereich rücktransformierten komplexen Korrelationsfunktion) zeigt im Anfangsbereich (bis ca. 2,5 m) einen Signalanteil (einen Reflexionspeak), der durch Reflexionen bei der Einkopplung des Schallwellensendesignals S in das Rohrleitungssystem entsteht. Dieser kann bei der Signalauswertung vernachlässigt werden. Daneben zeigt die Kurve in Fig. 5 jedoch auch reflektierte Signalanteile im Bereich von ca. 6,3 m, im Bereich von ca. 10,6 m, im Bereich von ca. 12,5 m, im Bereich von ca. 16,9 m und im Bereich von ca. 18,8 m.

Bei dem Signal in Fig. 5 handelt es sich um ein Messergebnis an einem nicht näher dargestellten realen Rohrleitungssystem und nicht um ein ausgewertetes Schallwellenempfangssignal im Fall der in den Fig. 1 und 2 dargestellten Rohrleitungssysteme 1, 100.

Zu jedem der in Fig. 5 dargestellten Reflexions-Peaks kann durch die Bestimmung des Maximums des Reflexions-Peaks der Abstand des zugehörigen Reflexionsorts, beispielsweise eines Abzweigs oder einer Durchmesserveränderung der betreffenden Rohrleitung, vom Einspeiseort ermittelt werden.

Neben der Bestimmung des Abstands eines Reflexionsorts vom Einspeise- beziehungsweise Detektionsort kann aus dem korrelierten Signal auch auf die Art der Unstetigkeitsstelle am betreffenden Reflexionsort geschlossen werden. Hierzu kann der betreffende Reflexions-Peak aus dem korrelierten Signal (im Zeitbereich bzw. als Funktion des Orts, wenn die erfasste Laufzeit mit der (korrigierten) Schallgeschwindigkeit in einen Ort bzw. einen Abstand vom Einspeiseort umgerechnet wurde) mit einer ausreichenden Breite ausgeschnitten werden, um alle relevanten Signalanteile, die durch den betreffenden Reflexionsort verursacht wurden zu erfassen. Aus der Form des Reflexions-Peaks des korrelierten (zeit- oder ortsabhängigen) Signals kann dann versucht werden, durch einen Vergleich mit zuvor empirisch oder theoretisch bestimmten Mustersignalen die Art der Unstetigkeitsstelle und ggf. weitere quantitative Merkmale der betreffenden Unstetigkeitsstelle zu bestimmen.

Allerdings ist die Empfindlichkeit des korrelierten Signals im Zeitbereich gegenüber unterschiedlichen Reflexionsursachen noch relativ gering. Es wird daher der ausgeschnittene Reflexions-Peak in den Frequenzbereich transformiert und der spektrale Verlauf der Amplitude und/oder der Phase (beziehungsweise des Real- und/oder Imaginärteils des transformierten Reflexions-Peak mit entsprechend vorab empirisch oder theoretisch ermittelten Musterverläufen verglichen.

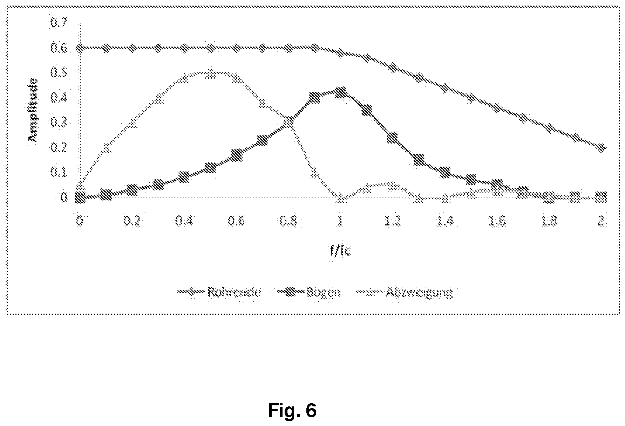

Als Beispiel für unterschiedliche Amplitudenspektren von entsprechend unterschiedlichen Reflexions-Peaks zeigt Fig. 6 Beispiele für an einem offenen Rohrleitungsende an einer Rohrkrümmung beziehungsweise an einem Bogen und an einer einem Abzweig erzeugte reflektierte Signalanteile, die jeweils einen deutlich unterschiedlichen Verlauf aufweisen.

Für einen besseren Vergleich können die aus dem erfassten Signal ermittelten Amplitudenspektren von (ausgeschnittenen) Reflexions-Peaks sowohl hinsichtlich der Frequenz als auch hinsichtlich der Amplitude normiert werden. Aus der Form des spektralen Verlaufs der Amplitude der Kurven in Fig. 6 kann dann durch einen entsprechenden Vergleich mit bekannten Musterverläufen auf die Art der Unstetigkeit geschlossen werden.

Für den Vergleich der aus dem Empfangssignal ermittelten Kurvenverläufe mit den vorbekannten Kurvenverläufen kann beispielsweise wiederum ein Korrelationsverfahren verwendet werden.

Durch eine Bewertung der absoluten Signalamplitude (im Zeit- oder Frequenzbereich) kann beispielsweise der Reflexionsfaktor ermittelt werden. Daraus kann versucht werden, ein oder mehrere quantitative Merkmale der Reflexionsursache zu bestimmen, beispielsweise den Durchmesser des abzweigenden Rohrs, das Maß der Veränderung des Durchmessers, den Krümmungswinkel etc.

Eine weitere Möglichkeit besteht darin, eine Klassifikation der messtechnisch ermittelten und rechnerisch aufbereiteten Daten mittels neuronaler Netze durchzuführen. Diese Art der Datenklassifizierung ist bekannt, so dass an dieser Stelle hierzu keine detaillierten Ausführungen erforderlich sind.

Da sowohl zur möglichst exakten Bestimmung des Abstands eines Reflexions-Peaks vom Einspeise- beziehungsweise Detektionsort die Schallgeschwindigkeit mit ausreichender Genauigkeit bekannt sein muss und die Schallgeschwindigkeit insbesondere von der Temperatur innerhalb der Rohrleitung abhängt, ist in Fig. 7 die Vorrichtung 13 zur Bestimmung von Eigenschaften einer Rohrleitung dargestellt, welche zusätzlich eine Einrichtung zur Bestimmung der Schallgeschwindigkeit beziehungsweise der Temperatur des Mediums innerhalb der Rohrleitung aufweist. Die Einrichtung zur Messung der Schallgeschwindigkeit umfasst zwei Schallwellensende- und Empfangseinheiten 21, 23, die in einem vorbestimmten Abstand L angeordnet sind. Jede der Schallwellensende- und Empfangseinheiten 21, 23 kann einen einzigen Schallwandler aufweisen, der sowohl als Schallgeber als auch als Schallsensor arbeiten kann. Des Weiteren ist es selbstverständlich ebenfalls möglich, jeweils einen Schallwandler zu verwenden, der als Schallsender arbeitet und einen zweiten Schallwandler, der nur als Schallsensor arbeitet. Die Schallwellensende- und Empfangseinheiten 21 können ebenfalls von der Steuer- und Auswerteeinheit der Vorrichtung 13 angesteuert werden beziehungsweise liefern die detektierten elektrischen Signale an die Steuer- und Auswerteeinheit, die dann die weiteren erforderlichen Auswertungen vornimmt.

Zur Messung der Schallgeschwindigkeit kann die Steuer- und Auswerteeinheit zunächst die Schallwellensende- und Empfangseinheit 21 so ansteuern, dass ein Schallwellensendesignal erzeugt wird, welches in Richtung auf die Schallwellensende- und Empfangseinheit 23 gesendet wird. Die Schallwellensende- und Empfangseinheit 23 empfängt das Schallsignal und wandelt dieses in ein elektrisches Signal um. Das elektrische Signal wird der Steuer- und Auswerteeinheit 18 der Vorrichtung 13 zugeführt.

Die Steuer- und Auswerteeinheit 18 kann dann die Signallaufzeit über die vorbekannte Strecke L durch eine Auswertung der Phasen des Sendesignals und des Empfangssignals oder direkt durch die Messung der Laufzeit eines Impulses (beispielsweise durch die Messung der Zeitdifferenz der jeweils vorderen Flanken eines Schallimpulses) ermitteln.

Für die Messung der Schallgeschwindigkeit wird ein Schallsignal im Ultraschallbereich verwendet, da das erzeugte Schallfeld gut durch eine ebene Welle beschrieben werden kann. Es wird daher die Schallgeschwindigkeit einer ebenen Welle innerhalb der Rohrleitung ermittelt (in anderen Worten: Die Wellenlänge des für die Messung der Schallgeschwindigkeit verwendeten Schallwellensendesignals muss klein gegen den Innendurchmesser der Rohrleitung sein, um den Einfluss der Rohrleitung auf die Schallgeschwindigkeit zu vermeiden; vorzugsweise ist die Wellenlänge kleiner als ein Fünftel des Innendurchmessers, besser noch kleiner als ein Zehntel des Rohrdurchmessers).

In gleicher Weise kann die Steuer- und Auswerteeinheit 18 die Schallwellensende- und Empfangseinheiten 23 beziehungsweise 21 so ansteuern beziehungsweise die Auswertung so vornehmen, dass die Laufzeit eines von der Schallwellensende- und Empfangseinheit 23 erzeugten Signals und von der Schallwellensende- und Empfangseinheit 21 detektierten Signals erfasst und hieraus die Schallgeschwindigkeit bestimmt wird.

Durch die Erfassung der Laufzeit t₁ in Richtung auf die Schallwellensende- und Empfangseinheit 23 als auch der Laufzeit t₂ eines Signals in Richtung auf die Schallwellensende- und Empfangseinheit 21 ergibt sich die Möglichkeit, hieraus nicht nur die Schallgeschwindigkeit c bei der gegebenen Temperatur innerhalb einer Rohrleitung zu messen, sondern auch die Geschwindigkeit des Mediums, beispielsweise der Luft, innerhalb der Rohrleitung.

Die Schallgeschwindigkeit ergibt sich dabei nach der Beziehung c = L/2·(t₁ + t₂)/(t₁·t₂). Die Geschwindigkeit v des Mediums innerhalb der Rohrleitung ergibt sich nach der Beziehung v = l/2·(t₂ - t₁)/(t₁·t₂).

Die so ermittelte Schallgeschwindigkeit c bei der gegebenen Temperatur kann dann von der Steuer- und Auswerteeinheit unmittelbar zur Umrechnung der erfassten Gesamtlaufzeit (Laufzeit des Schallwellensendesignals vom Einspeiseort bis zum Reflexionsort plus Laufzeit des reflektierten Signalanteils vom Reflexionsort zum Einspeiseort beziehungsweise Detektionsort) in einen Abstand l_{R} vom Einspeise- und Detektionsort verwendet werden. Hierfür ergibt sich die Beziehung l_{R} = t_{g}·(c² - v²)/(2·c), wobei mit t_{g} die Gesamtlaufzeit bezeichnet ist, also die Laufzeit des Schallwellensendesignals zum Reflexionsort und die Laufzeit des reflektierten Signalanteils im Empfangssignal E zum Einspeiseort.

Da, wie vorstehend erläutert, möglichst die temperaturabhängige Schallgeschwindigkeit einer ebenen Welle innerhalb der Rohrleitung und auch die Geschwindigkeit des Mediums (beispielsweise die Windgeschwindigkeit) innerhalb der Rohrleitung erfasst werden soll, sind die Schallwellensende- und Empfangseinheiten 21, 23 an einem Arm 25 angeordnet, der an der Frontseite der Vorrichtung 13 vorgesehen ist. Damit kann zumindest der Arm 25 mit den Schallwellensende- und Empfangseinheiten 21, 23 ausreichend weit in die betreffende Rohrleitung eingeführt werden.

Im Folgenden werden eine Vorrichtung und ein Verfahren zur Bestimmung des Innendurchmessers D einer Rohrleitung 3 (Fig. 8) beschrieben, wobei hierzu ebenfalls eine Ultraschallmesseinrichtung eingesetzt wird. Die Fig. 7 und 8 zeigen eine Vorrichtung 13 mit drei weiteren Schallwellensende- und Empfangseinheiten 27, 29, 31, die entlang des Umfangs des Arms 25 in einem Winkelabstand von ca. 120° angeordnet sind. Diese Anordnung ist jedoch in weiten Grenzen beliebig.

In axialer Richtung sind die Schallwellensende- und Empfangseinheiten 27, 29, 31 so am Arm 25 angeordnet, dass sie ausreichend weit in die betreffende Rohrleitung eingeführt werden können, um mittels jeweils eines radial abgegebenen Schallwellensendesignals den Abstand der betreffenden Schallwellensende- und Empfangseinheit von der Rohrinnenwandung zu bestimmen.

Die Schallwellensende- und Empfangseinheiten 27, 29, 31 können genauso ausgebildet sein wie die Schallwellensende- und Empfangseinheiten 21, 23, so dass auf die vorstehenden Ausführungen verwiesen werden kann.

Die Abstandsmessung erfolgt ebenfalls mit Schallsignalen, die vorzugsweise im Ultraschallbereich liegen, um eine ausreichende Auflösung zu gewährleisten. Jede der Schallwellensende- und Empfangseinheiten 27, 29, 31 kann (jeweils zeitlich nacheinander) ein Schallwellensendesignal erzeugen, welches in radialer Richtung abgestrahlt wird. Das von der Rohrinnenwandung reflektierte Signal wird von der betreffenden Schallwellensende- und Empfangseinheit detektiert. In Folge der relativ kleinen zu messenden Abstände bietet es sich an, zur Bestimmung der Signallaufzeit die Phasendifferenz zwischen dem Schallwellensendesignal und dem reflektierten Signal zu messen und aus der bekannten (konstanten) Signalfrequenz im Ultraschallbereich die Laufzeit zu bestimmen. Da in diesem Fall gleichzeitig das Senden des Schallwellensendesignals und das Detektieren des Empfangssignals erfolgen muss, weisen die Schallwellensende- und Empfangseinheiten 27, 29, 31 vorzugsweise jeweils zwei Schallwandler auf, wobei einer der Schallwandler als Schallgeber und der andere Schallwandler als Schallsensor arbeitet.

Mit der zuvor gemessenen Schallgeschwindigkeit bei der gegebenen Temperatur kann dann der Abstand der betreffenden Schallwellensende- und Empfangseinheit 27, 29, 31 von der Rohrinnenwandung hochgenau bestimmt werden.

Falls der Arm 25 mit ausreichender Genauigkeit koaxial im Rohr beziehungsweise Rohrabschnitt 3 positioniert werden kann, so ist es möglich, den Rohrdurchmesser D aus jedem der bestimmten Abstände der Rohrinnenwandung von der betreffenden Schallwellensende- und Empfangseinheit 27, 29, 31 und dem bekannten Abstand der betreffenden Schallwellensende- und Empfangseinheit 27, 29, 31 von der Achse des Arms 25 (beziehungsweise der Achse des Rohrs 3) zu bestimmen. Durch eine Mittelung der auf diese Weise bestimmten drei Rohrdurchmesser kann eine Verbesserung der Genauigkeit erreicht werden. Allerdings gilt dies nur, wie vorstehend ausgeführt, für eine ausreichend genaue koaxiale Positionierung des Arms 25 beziehungsweise der Schallwellensende- und Empfangseinheiten 27, 29, 31 innerhalb des Rohrs 3.

Der Rohrdurchmesser lässt sich jedoch auch dann mit ausreichender Genauigkeit bestimmen, wenn der Arm 25 beziehungsweise die Schallwellensende- und Empfangseinheiten 27, 29, 31 beliebig exzentrisch im Rohr 3 positioniert sind. Es werden dann jeweils Tripel von Abständen der betreffenden Schallwellensende- und Empfangseinheit 27, 29, 31 von der Innenwandung des Rohrs 3 bestimmt. Diese Tripel von Messwerten können als dreidimensionale Vektoren aufgefasst werden.

Da für einen bestimmten Rohrdurchmesser sämtliche möglichen Positionen der Schallwellensende- und Empfangseinheiten 27, 29, 31 eine zweidimensionale Fläche im dreidimensionalen Vektorraum der möglichen Abstände bilden, und für jeden Rohrdurchmesser eine eigene derartige Fläche existiert, ist es möglich, ein durch Messung bestimmtes Messabstandstripel einer Fläche zuzuordnen. Dabei kann gezeigt werden, dass sich die Flächen für die unterschiedlichen Rohrdurchmesser nicht schneiden und demzufolge eine eindeutige Zuordnung möglich ist.

Auf diese Weise kann die Steuer- und Auswerteeinheit 18 zur Bestimmung des Rohrleitungsdurchmessers die Schallwellensende- und Empfangseinheit 27, 29, 31 zunächst so ansteuern, dass die einzelnen Abstände und damit ein Messwerttripel bestimmt werden. Das so bestimmte Abstandstripel kann dann einer bestimmten Fläche zugeordnet werden, wodurch der zur betreffenden Fläche zugehörige Rohrdurchmesser bestimmt ist. Der Steuer- und Auswerteeinheit 18 können zur Beschreibung der zweidimensionalen Flächen im dreidimensionalen Vektorraum entweder analytische Abhängigkeiten bekannt sein oder es können Stützpunkte für jede Fläche gespeichert sein, wobei Zwischenwerte der Fläche durch (nichtlineare) Interpolation bestimmbar sind. Sind die Messwerte so beschaffen, dass sich keine ausreichend exakte und eindeutige Zuordnung zu einer zweidimensionalen Fläche bestimmen lässt, kann eine Zuordnung zu der am nächsten liegenden Fläche, beispielsweise unter Ermittlung einer maximalen Wahrscheinlichkeit, erfolgen.

Dieses Verfahren ist selbstverständlich auch unter Verwendung von mehr als drei Schallwellendsende- und Empfangseinheiten realisierbar. Dabei geben sich anstelle der Tripel n-Tupel beziehungsweise zweidimensionale Flächen in einem n-dimensionalen Vektorraum. Die Abstandsbestimmung erfolgt dann in analoger Weise.

In diesem Zusammenhang sei darauf hingewiesen, dass in der Praxis verfügbare Ultraschallgeber beziehungsweise Ultraschallsensoren eine relativ breite keulenförmige Strahlungs- bzw. Empfindlichkeitscharakteristik aufweisen, die einen 3 dB Abfall erst bei einem Öffnungswinkel ± 30 °aufweisen. Bei einer exzentrischen Positionierung der Schallwellensende- und Empfangseinheiten 27, 29, 31 wird somit immer der kürzeste Abstand zur Rohrinnenwandung ermittelt, da derjenige Bereich der Fläche der Innenwandung des Rohrs 3 den stärksten Reflexionsbeitrag liefert, der senkrecht zur Laufrichtung der Wellenfront verläuft (eine im Wesentlichen deckungsgleiche Charakteristik des Schallgebers und des Schallsensors vorausgesetzt).

Da derartige Schallgeber beziehungsweise Schallsensoren im Ultraschallbereich bis in Frequenzbereiche über 100 kHz äußerst kostengünstig verfügbar sind, kann auf diese Weise der Rohrdurchmesser einfach, schnell und hochgenau bestimmt werden. Die hierzu erforderliche Rechenleistung ist in der Steuer- und Auswerteeinheit der Vorrichtung 13 bereits vorhanden. An dieser Stelle sei erwähnt, dass die Auswerte- und Steuereinheit 18 selbstverständlich entweder im Gehäuse der Vorrichtung 13 umfasst sein kann, welches in das Rohr beziehungsweise vor die Rohröffnung positioniert wird oder auch in einem separaten Gehäuse, wobei in diesem Fall die erforderliche Signalübertragung zwischen den beiden Vorrichtungsteilen entweder kabelgebunden oder drahtlos übertragen werden können. So ist es beispielsweise möglich, die Auswerte- und Steuereinheit in einem separaten Gehäuse, beispielsweise in Form eines PCs oder Prozessrechners zu realisieren, der kabelgebunden mit der eigentlichen Messeinheit in Verbindung steht, welche in die Rohrleitung eingebracht wird beziehungsweise vor die betreffende Rohröffnung positioniert wird.

Zusammenfassend kann somit festgestellt werden, dass mittels des vorstehend beschriebenen Verfahrens beziehungsweise der vorstehend beschriebenen Vorrichtungen eine einfache, schnelle und exakte Bestimmung zumindest des Abstands von Unstetigkeiten einer Rohrleitung und hierdurch gebildeten Reflexionsorten ermöglicht wird. Durch die Messung der temperaturabhängigen Schallgeschwindigkeit und der Geschwindigkeit des Mediums im Rohrinneren wird die Genauigkeit noch verbessert. Durch die zusätzliche Bestimmung des Innendurchmessers der Rohrleitung im Einspeisebereich kann zum einen eine nochmals gesteigerte Genauigkeit der Bestimmung der Schallgeschwindigkeit der Grundmode erreicht werden und zum anderen kann der Durchmesser zur Berechnung der unteren Grenzfrequenz der ersten Obermode verwendet werden. Diese Grenzfrequenz kann zur Normierung der spektralen Verläufe (Amplitudenverlauf und/oder Phasenverlauf) von reflektierten Signalanteilen verwendet werden, wodurch auf einfache Weise ein Vergleich mit vorbekannten Mustern und eine Klassifizierung der Reflexionsursachen möglich ist.

Des Weiteren kann aus der Amplitude der bestimmten reflektierten Signalanteile im Zeitbereich oder aus den auf die Grenzfrequenz normierten Verläufen der Amplitude und/oder der Phase im Frequenzbereich nicht nur auf die Art der Unstetigkeit (Abzweig, Krümmung, Änderung des Rohrdurchmessers) geschlossen werden, sondern es können auch quantitative Aussagen über bestimmte Eigenschaften der Unstetigkeit getroffen werden. Beispielsweise kann aus diesen Daten unter Verwendung bestimmter zuvor empirisch oder theoretisch ermittelter charakteristischer Werte oder Signalverläuft auf den Durchmesser eines abzweigenden Rohrs, auf das Ausmaß einer Änderung des Durchmessers oder den Winkel einer Krümmung geschlossen werden.

### Bezugszeichenliste

- 1: Rohrleitungssystem
- 3: erster gerader Abschnitt
- 5: Krümmungsabschnitt
- 7: zweiter gerader Abschnitt
- 8: offenes Ende des Abschnitts 7
- 9: Abzweig
- 11: abzweigendes Rohr
- 13: Vorrichtung zur Bestimmung von Eigenschaften einer Rohrleitung
- 15: Schallwandler, Lautsprecher
- 17: Schallwandler, Mikrofon
- 18: Steuer- und Auswerteeinheit
- 19: Schallwellenempfangseinheit
- 21: Schallwellensende- und Empfangseinheit
- 23: Schallwellensende- und Empfangseinheit
- 25: Arm
- 27: Schallwellensende- und Empfangseinheit
- 29: Schallwellensende- und Empfangseinheit
- 31: Schallwellensende- und Empfangseinheit

- 100: Rohrleitungssystem
- 102: Hauptleitung
- 104: Abzweig
- 105: abzweigende Leitung
- 106: Abzweig
- 107: abzweigende Leitung
- 108: Abzweig
- 109: abzweigende Leitung

- D: Innendurchmesser der Hauptrohrleitung
- d: Innendurchmesser der abzweigenden Rohrleitung 11
- S, S': Schallwellensendesignal
- Sᵣ₁; S'ᵣ₁: reflektierter Signalanteil
- Sᵣ₂; S'ᵣ₂: reflektierter Signalanteil
- Sᵣ₁; S'ᵣ₃: reflektierter Signalanteil
- E, E': Schallwellenempfangssignal
- L: vorbekannte Strecke zur Bestimmung der Schallgeschwindigkeit
- I: Abstand vom Einspeise- und Detektionsort

## Patentansprüche

1. Verfahren zur Bestimmung von Eigenschaften einer Rohrleitung, insbesondere der Position eines Abzweigs einer Abwasserrohrleitung,
(a) bei dem ein Schallwellensendesignal (S, S') an einem vorgegebenen Einspeisepunkt in die Rohrleitung (1) eingespeist wird und sich in axialer Richtung der Rohrleitung (1) ausbreitet,
(b) wobei das Frequenzspektrum des Schallwellensendesignals (S, S') eine Frequenzkomponente oder einen Spektralbereich aufweist, dessen maximale Frequenz kleiner ist als die untere Grenzfrequenz (f_{c}) der in der Rohrleitung ausbreitungsfähigen ersten Obermode,
(c) bei dem innerhalb der Rohrleitung (1) reflektierte Anteile (Sᵣ₁, Sᵣ₂, Sᵣ₃, S'ᵣ₁, S'ᵣ₂, S'ᵣ₃) des Schallwellensendesignals (S, S') als Schallwellenempfangssignal (E, E') detektiert werden, und
(d) bei dem die Rohrleitung (1) durch eine Auswertung des Schallwellenempfangssignal (E, E') in Bezug auf das Schallwellensendesignal (S, S') hinsichtlich des Vorhandenseins von Schallwellenreflexionen (Sᵣ₁, Sᵣ₂, Sᵣ₃, S'ᵣ₁, S'ᵣ₂, S'ᵣ₃) verursachenden Reflexionsorten entlang der Rohrleitung (1) untersucht wird,
(e) wobei mittels der Auswertung des Schallwellenempfangssignals (E, E') zumindest jeweils der Abstand (I) eines Reflexionsortes von dem Einspeisepunkt bestimmt wird,
**dadurch gekennzeichnet,**
(f) **dass** die Schallgeschwindigkeit (c) der Grundmode bei der aktuellen Temperatur innerhalb der Rohrleitung (1) unter Verwendung eines Schallwellenmesssignals ermittelt wird, welches eine Frequenz oder ein Frequenzspektrum aufweist, bei dem das Schallwellenmesssignal innerhalb der Rohrleitung (1) mit ausreichender Genauigkeit als ebene Schallwelle behandelt wird, wobei hierzu die Laufzeiten des Schallwellenmesssignals über eine vorbekannte Strecke (L) in beiden Richtungen gemessen wird,
(g) **dass** die so ermittelte Schallgeschwindigkeit (c) einer ebenen Schallwelle gleich der tatsächlichen Schallgeschwindigkeit der Grundmode bei der aktuellen Temperatur innerhalb der Rohrleitung (1) gesetzt wird, und
(h) **dass** die so bestimmte Schallgeschwindigkeit zur Bestimmung des Abstands (I) eines Reflexionsortes von dem Einspeisepunkt verwendet wird.

2. Verfahren nach Anspruch 1, **dadurch gekennzeichnet, dass** das Schallwellensendesignal (S, S') ein Chirp-Impuls ist.

3. Verfahren nach Anspruch 2, **dadurch gekennzeichnet, dass** zur Auswertung das Schallwellenempfangssignal (E, E') mit dem Schallwellensendesignal (S, S') korreliert wird, vorzugsweise durch eine Transformation der beiden Signale in den komplexen Frequenzbereich und durch Berechnung der Korrelation im Komplexen, wobei vorzugsweise Veränderungen sowohl der Amplitude als auch der Phase des Schallwellenempfangssignals (E, E') gegenüber dem Schallwellensendesignals (S, S') ermittelt werden.

4. Verfahren nach Anspruch 2 oder 3, **dadurch gekennzeichnet, dass** ein oder mehrere zeitlich separierbare reflektierte Anteile (Sᵣ₁, Sᵣ₂, Sᵣ₃, S'ᵣ₁, S'ᵣ₂, S'ᵣ₃) des Schallwellenempfangssignals (E, E') mit einem vorbestimmten Zeitintervall aus dem Schallwellenempfangssignal (E, E') ausgeschnitten und hinsichtlich des zeitlichen Verlaufs und/oder des Frequenzverlauf der Amplitude und/oder des Frequenzverlaufs der Phase oder hinsichtlich der Abweichung des zeitlichen Verlaufs und/oder des Frequenzverlaufs der Amplitude und/oder des Frequenzverlaufs der Phase von dem betreffenden Verlauf des Schallwellensendesignals (S, S') nach dem Auftreten vorbestimmter Merkmale analysiert werden und dass abhängig vom Auftreten eines oder mehrerer vorbestimmter Merkmale der betreffende Anteil des Schallwellenempfangssignals (E, E') einer generellen Klasse von Reflexionsorten zugeordnet wird, beispielsweise einem Rohrleitungsabzweig (9), einer Änderung des Rohrleitungsdurchmessers, einer Krümmung (5) der Rohrleitung (1) oder einem Hindernis innerhalb der Rohrleitung (1).

5. Verfahren nach Anspruch 4, **dadurch gekennzeichnet, dass** durch die Klassifizierung zusätzlich zur generellen Klasse von Reflexionsorten aus dem einen oder mehreren vorbestimmten Merkmalen quantitative Informationen für einen Reflexionsort ermittelt werden, wie der Durchmesser (d) eines Rohrleitungsabzweigs (9), der Wert der absoluten oder relativen Vergrößerung oder Verringerung des Durchmessers (D) der Rohrleitung, der Winkel der Krümmung (5) der Rohrleitung (1) oder die Art und/oder Größe des Hindernisses innerhalb der Rohrleitung (1).

6. Verfahren nach einem der vorhergehenden Ansprüche, **dadurch gekennzeichnet, dass** die Schallgeschwindigkeit c entlang der vorbekannten Strecke (L) nach der Beziehung c = L/2·(t₂ + t₁)/(t₁ · t₂) ermittelt wird, wobei mit L der Betrag der Strecke, mit t₁ die gemessene Laufzeit entlang der Strecke (L) in der Hinrichtung und mit t₂ die gemessene Laufzeit entlang der Strecke (L) in der Rückrichtung bezeichnet sind, und dass die so berechnete Schallgeschwindigkeit bei der Bestimmung der Position der Reflexionsorte verwendet wird.

7. Verfahren nach Anspruch 6, **dadurch gekennzeichnet, dass** die vorbekannte Strecke (L) parallel zur Achse der Rohrleitung (1) verläuft, vorzugsweise in oder nahe der Achse der Rohrleitung (1) liegt, und dass zusätzlich zur Schallgeschwindigkeit (c) auch die Geschwindigkeit (v) des Mediums in der Rohrleitung (1) nach der Beziehung v = L/2·(t₂ - t₁)/(t₁ · t₂) ermittelt wird, und dass neben der Schallwellengeschwindigkeit (c) auch die Geschwindigkeit (v) des Mediums in der Rohrleitung (1) bei der Bestimmung der Position der Reflexionsorte verwendet wird, wobei der Abstand l_{R} eines Reflexionsortes vom Einspeisepunkt die Beziehung l_{R} = t_{g}·(c² - v²)/(2·c) bestimmt wird, worin mit t_{g} die ermittelte Gesamtlaufzeit des Schallwellensignals vom Einspeisepunkt zum Reflexionsort und eines dort reflektierten Anteils des Schallwellenempfangssignals (E, E') zurück zum Einspeiseort bezeichnet ist.

8. Verfahren nach einem der vorhergehenden Ansprüche, **dadurch gekennzeichnet, dass** der Innendurchmesser (D) der Rohrleitung (1) durch Abstandsmessungen in wenigstens drei radialen Erfassungsrichtungen mittels Schallsignalen ermittelt wird, welche von jeweils einem Ort innerhalb der Rohrleitung (1) in radialer Richtung ausgesandt und von der Innenwandung der Rohrleitung (1) reflektiert werden und deren Wellenlänge klein gegen den Durchmesser (D) der Rohrleitung (1) ist, wobei jeweils die gesamte Laufzeit zwischen dem Senden des Schallsignals und dem Empfangen des reflektierten Signals direkt mittels impulsförmiger Schallsignale und einer Erfassung der Zeitdifferenz zwischen dem Senden eines impulsförmigen Schallsignals und dem Empfangen des betreffenden reflektierten impulsförmigen Schallsignals bestimmt wird oder aus der Phasenverschiebung zwischen einem gesendeten Schallsignal mit einer zeitlichen Dauer, die größer ist als die gesamte Laufzeit, und dem reflektierten empfangenen Schallsignal, und wobei mittels der Schallgeschwindigkeit die Abstände zwischen den wenigstens drei Sende- und Empfangsorten und hieraus der Innendurchmesser (D) der Rohrleitung (1) bestimmt werden.

9. Verfahren nach einem der vorhergehenden Ansprüche, **dadurch gekennzeichnet, dass** die Temperatur und/oder der Rohrinnendurchmesser (D) zur Normierung der Frequenz in den Frequenzverläufen der Signale für die Klassifizierung verwendet werden, insbesondere die Temperatur zur Bestimmung der Schallgeschwindigkeit und/oder die der Rohrinnendurchmesser (D) zur Bestimmung der Grenzfrequenz (f_{c}) der ersten Obermode, wobei die Grenzfrequenz (f_{c}) mittels der Schallgeschwindigkeit und des Rohrinnendurchmessers bestimmt und zur Normierung der Frequenz verwendet wird .

10. Vorrichtung zur Bestimmung von Eigenschaften einer Rohrleitung, insbesondere der Position eines Abzweigs einer Abwasserrohrleitung,
(a) mit einer Schallwellensendeeinheit für das Erzeugen eines Schallwellensendesignals (S, S'),
(b) wobei das Frequenzspektrum des Schallwellensendesignals (S, S') eine Frequenzkomponente oder einen Spektralbereich aufweist, dessen maximale Frequenz kleiner ist als die untere Grenzfrequenz (f_{c}) der in der Rohrleitung (1) ausbreitungsfähigen ersten Obermode,
(c) mit einer Schallwellenempfangseinheit für das Detektieren von innerhalb der Rohrleitung (1) reflektierten Anteilen (Sᵣ₁, Sᵣ₂, Sᵣ₃, S'ᵣ₁, S'ᵣ₂, S'ᵣ₃) des Schallwellensendesignals (S, S') als Schallwellenempfangssignal (E, E'), und
(d) einer Steuer- und Auswerteeinheit zur Ansteuerung der Schallwellensendeeinheit und zur Auswertung des von der Schallwellenempfangseinheit detektierten Schallwellenempfangssignals, wobei die Steuer- und Auswerteeinheit das Schallwellenempfangssignal (E, E') in Bezug auf das Schallwellensendesignal (S, S') hinsichtlich des Vorhandenseins von Schallwellenreflexionen (Sᵣ₁, Sᵣ₂, Sᵣ₃, S'ᵣ₁, S'ᵣ₂, S'ᵣ₃) verursachenden Reflexionsorten entlang der Rohrleitung (1) auswertet,
(e) wobei die Steuer- und Auswerteeinheit mittels der Auswertung des Schallwellenempfangssignals (E, E') zumindest jeweils den Abstand (I) eines Reflexionsortes von dem Einspeisepunkt bestimmt,
**dadurch gekennzeichnet,**
(f) **dass** die Vorrichtung eine Einrichtung zur Messung der Schallgeschwindigkeit (c) in einer Rohrleitung (1) umfasst, welche zwei in einem vorbestimmten Abstand vorgesehene Schallwellensende- und Empfangseinrichtungen (21, 23) aufweist, wobei die Schallwellensendeeinheiten der Schallwellensende- und Empfangseinrichtungen von der Steuer- und Auswerteeinheit hinsichtlich der Eigenschaften und/oder des Zeitpunkts des Sendens eines Schallwellenmesssignals ansteuerbar ausgebildet sind und wobei die Empfangssignale der Empfangseinheiten der Schallwellensende- und Empfangseinrichtungen der Steuer- und Auswerteeinheit zur Auswertung zugeführt sind, und dass die Steuer- und Auswerteeinheit das Verfahren nach einem der vorhergehenden Ansprüche durchführt.

11. Vorrichtung nach Anspruch 10, **dadurch gekennzeichnet, dass** die Einrichtung zur Messung der Schallgeschwindigkeit (c) an einem Längsträger (25) angeordnet ist, welcher im Bereich eines Endes mit der Schallwellensendeeinheit und der Schallwellenempfangseinheit der Vorrichtung zur Bestimmung von Eigenschaften einer Rohrleitung (1) verbunden ist.

12. Vorrichtung nach einem der Ansprüche 10 oder 11, **dadurch gekennzeichnet, dass** eine Einrichtung zur Messung des Innendurchmessers (D) einer Rohrleitung (1) vorgesehen ist, welche drei Schallwellensende- und Empfangseinrichtungen (27, 29, 31) aufweist, wobei die Schallwellensendeeinheiten der Schallwellensende- und Empfangseinrichtungen (27, 29, 31) hinsichtlich der Eigenschaften und/oder des Zeitpunkts des Sendens eines Schallwellenmesssignals von der Steuer- und Auswerteeinheit ansteuerbar ausgebildet und so angeordnet sind, dass sie jeweils ein Schallwellensendesignal in einer jeweils anderen radialen Richtung aussenden, und wobei die Schallwellenempfangseinheiten der Schallwellensende- und Empfangseinrichtungen (27, 29, 31) so ausgebildet sind, dass sie jeweils das an der Innenwandung einer Rohrleitung (1) reflektierte Schallwellensendesignal empfangen und das betreffende Empfangssignal der Steuer- und Auswerteeinheit zuführen, und dass die Steuer- und Auswerteeinheit das Verfahren nach einem der Ansprüche 8 oder 9 durchführt.

## Claims

1. Method for determining properties of a pipeline, in particular the position of a branch of a wastewater pipeline,
(a) in which a sound wave transmission signal (S, S') is fed into the pipeline (1) at a predetermined feed point and said sound wave transmission signal propagates along the axial direction of the pipeline (1),
(b) wherein the frequency spectrum of the sound wave transmission signal (S, S') has a frequency component or a spectral range, the maximum frequency of which is less than the lower limit frequency (f_{c}) of the first harmonic able to propagate in the pipeline,
(c) in which components (Sᵣ₁, Sᵣ₂, Sᵣ₃, S'ᵣ₁, S'ᵣ₂, S'ᵣ₃) of the sound wave transmission signal (S, S') that are reflected within the pipeline (1) are detected as a sound wave reception signal (E, E'), and
(d) in which, by means of an evaluation of the sound wave reception signal (E, E') with respect to the sound wave transmission signal (S, S'), the pipeline (1) is examined in respect of the presence of reflection locations along the pipeline (1) that cause sound wave reflections (Sᵣ₁, Sᵣ₂, Sᵣ₃, S'ᵣ₁, S'ᵣ₂, S'ᵣ₃),
(e) wherein, by way of the evaluation of the sound wave reception signal (E, E'), at least the distance (1) of a reflection location from the feed point is determined in each case,
**characterized**
(f) **in that** the sound speed (c) of the fundamental mode at the current temperature within the pipeline (1) is ascertained using a sound wave measurement signal, which has a frequency or a frequency spectrum at which the sound wave measurement signal is treated as a plane sound wave within the pipeline (1) with sufficient accuracy, wherein the times-of-flight of the sound wave measurement signal is measured in both directions over a segment (L) known in advance,
(g) **in that** the sound speed (c) of a plane sound wave thus ascertained is set to be equal to the actual sound speed of the fundamental mode at the current temperature within the pipeline (1), and
(h) **in that** the sound speed thus determined is used to determine the distance (1) of a reflection location from the feed point.

2. Method according to Claim 1, **characterized in that** the sound wave transmission signal (S, S') is a chirp pulse.

3. Method according to Claim 2, **characterized in that** the sound wave reception signal (E, E') is correlated with the sound wave transmission signal (S, S') for evaluation purposes, preferably by transforming both signals into the complex frequency domain and by calculating the correlation in the complex domain, wherein, preferably, changes in both the amplitude and the phase of the sound wave reception signal (E, E') with respect to the sound wave transmission signal (S, S') are ascertained.

4. Method according to Claim 2 or 3, **characterized in that** one or more temporally separable reflected components (Sᵣ₁, Sᵣ₂, Sᵣ₃, S'ᵣ₁, S'ᵣ₂, S'ᵣ₃) of the sound wave reception signal (E, E') are cut out of the sound wave reception signal (E, E') in a predetermined time interval and are analysed in respect of the time profile and/or the frequency profile of the amplitude and/or the frequency profile of the phase or in respect of the deviation of the time profile and/or the frequency profile of the amplitude and/or the frequency profile of the phase from the relevant profile of the sound wave transmission signal (S, S') after the occurrence of predetermined features and **in that**, depending on the occurrence of one or more predetermined features, the relevant component of the sound wave reception signal (E, E') is assigned to a general class of reflection locations, for example a pipeline branch (9), a change in the pipeline diameter, a curvature (5) of the pipeline (1) or an obstacle within the pipeline (1).

5. Method according to Claim 4, **characterized in that**, by way of the classification, quantitative information items for a reflection location, such as the diameter (d) of a pipeline branch (9), the value of the absolute or relative increase or decrease of the diameter (D) of the pipeline, the angle of the curvature (5) of the pipeline (1) or the type and/or size of the obstacle within the pipeline (1), are ascertained in addition to the general class of reflection locations from the one or more predetermined features.

6. Method according to any one of the preceding claims, **characterized in that** the sound speed c along the segment (L) known in advance is ascertained according to the relationship c = L/2·(t₂ + t₁)/(t₁·t₂), where L denotes the length of the segment, t₁ denotes the measured time-of-flight along the segment (L) in the outward direction and t₂ denotes the measured time-of-flight along the segment (L) in the return direction, and **in that** the sound speed thus calculated is used when determining the position of the reflection locations.

7. Method according to Claim 6, **characterized in that** the segment (L) known in advance extends parallel to the axis of the pipeline (1), preferably lies along or in the vicinity of the axis of the pipeline (1), and **in that**, in addition to the sound speed (c), the speed (v) of the medium in the pipeline (1) is also ascertained according to the relationship v = L/2·(t₂ - t₁)/(t₁·t₂), and **in that**, in addition to the sound wave speed (c), the speed (v) of the medium in the pipeline (1) is also used when determining the position of the reflection locations, wherein the distance l_{R} of a reflection location from the feed point is determined by the relationship l_{R} = t_{g}·(c² - v²)/(2·c), where t_{g} denotes the ascertained overall time-of-flight of the sound wave signal from the feed point to the reflection location and of a component of the sound wave reception signal (E, E'), reflected there, back to the feed location.

8. Method according to any one of the preceding claims, **characterized in that** the internal diameter (D) of the pipeline (1) is ascertained by means of sound signals by distance measurements in at least three radial capture directions, said sound signals being emitted in the radial direction from one location within the pipeline (1) in each case and said sound signals being reflected by the inner wall of the pipeline (1) and said sound signals having a wavelength that is short in comparison to the diameter (D) of the pipeline (1), wherein, in each case, the entire time-of-flight between the transmission of the sound signal and the reception of the reflected signal is determined directly by means of pulse-shaped sound signals and a capture of the time difference between the transmission of a pulse-shaped sound signal and the reception of the relevant reflected pulse-shaped sound signal or said time-of-flight is determined from the phase shift between a transmitted sound signal with a time duration that is greater than the entire time-of-flight and the reflected received sound signal, and wherein the distances between the at least three transmission and reception locations and, from this, the internal diameter (D) of the pipeline (1) are determined by means of the sound speed.

9. Method according to any one of the preceding claims, **characterized in that** the temperature and/or the pipe internal diameter (D) are used for normalizing the frequency in the frequency profiles of the signals for the classification, in particular the temperature for determining the sound speed and/or the pipe internal diameter (D) for determining the limit frequency (f_{c}) of the first harmonic, wherein the limit frequency (f_{c}) is determined by means of the sound speed and the pipe internal diameter and used to normalize the frequency.

10. Apparatus for determining properties of a pipeline, in particular the position of a branch of a wastewater pipeline,
(a) comprising a sound wave transmission unit for producing a sound wave transmission signal (S, S'),
(b) wherein the frequency spectrum of the sound wave transmission signal (S, S') has a frequency component or a spectral range, the maximum frequency of which is less than the lower limit frequency (f_{c}) of the first harmonic able to propagate in the pipeline (1),
(c) comprising a sound wave reception unit for detecting, as a sound wave reception signal (E, E'), components (Sᵣ₁, Sᵣ₂, Sᵣ₃, S'ᵣ₁, S'ᵣ₂, S'ᵣ₃) of the sound wave transmission signal (S, S') reflected within the pipeline (1), and
(d) a control and evaluation unit for actuating the sound wave transmission unit and for evaluating the sound wave reception signal detected by the sound wave reception unit, wherein the control and evaluation unit evaluates the sound wave reception signal (E, E') with respect to the sound wave transmission signal (S, S') in respect of the presence of reflection locations along the pipeline (1) that cause sound wave reflections (Sᵣ₁, Sᵣ₂, Sᵣ₃, S'ᵣ₁, S'ᵣ₂, S'ᵣ₃),
(e) wherein the control and evaluation unit in each case at least determines the distance (1) of a reflection location from the feed point by way of evaluating the sound wave reception signal (E, E'),
**characterized**
(f) **in that** the apparatus comprises a device for measuring the sound speed (c) in a pipeline (1), which has two sound wave transmission and reception devices (21, 23) provided at a predetermined spacing, wherein the sound wave transmission units of the sound wave transmission and reception devices are embodied to be actuatable by the control and evaluation unit in respect of the properties and/or the time of the transmission of a sound wave measurement signal and wherein the reception signals of the reception units of the sound wave transmission and reception devices are fed to the control and evaluation unit for evaluation purposes, and in that the control and evaluation unit carries out the method according to any one of the preceding claims.

11. Apparatus according to Claim 10, **characterized in that** the device for measuring the sound speed (c) is arranged on a longitudinal support (25), which is connected in the region of one end to the sound wave transmission unit and the sound wave reception unit of the apparatus for determining properties of a pipeline (1).

12. Apparatus according to either of Claims 10 and 11, **characterized in that** provision is made of a device for measuring the internal diameter (D) of a pipeline (1), said device having three sound wave transmission and reception devices (27, 29, 31), wherein the sound wave transmission units of the sound wave transmission and reception devices (27, 29, 31) are embodied to be actuatable by the control and evaluation unit in respect of the properties and/or the time of the transmission of a sound wave measurement signal and are arranged in such a way that they each transmit a sound wave transmission signal in a different radial direction in each case, and wherein the sound wave reception units of the sound wave transmission and reception devices (27, 29, 31) are embodied in such a way that they each receive the sound wave transmission signal reflected at the inner wall of a pipeline (1) and feed the relevant reception signal to the control and evaluation unit, and **in that** the control and evaluation unit carries out the method according to either of Claims 8 and 9.

## Revendications

1. Procédé de détermination de propriétés d'une tuyauterie, en particulier de la position d'une bifurcation d'une canalisation d'eaux usées,
(a) selon lequel un signal d'onde sonore émis (S, S') est injecté en un point d'injection prédéfini dans la tuyauterie (1) et se propage dans la direction axiale de la tuyauterie (1),
(b) dans lequel le spectre de fréquences du signal d'onde sonore émis (S, S') présente une composante de fréquence ou une zone spectrale dont la fréquence maximale est plus petite que la fréquence limite inférieure (f_{c}) du premier mode harmonique capable de se propager dans la tuyauterie,
(c) selon lequel des parts réfléchies (Sᵣ₁, Sᵣ₂, Sᵣ₃, S'ᵣ₁, S'ᵣ₂, S'ᵣ₃) à l'intérieur de la tuyauterie (1) du signal d'onde sonore émis (S, S') sont détectées en tant que signal d'onde sonore reçu (E, E'), et
(d) selon lequel la tuyauterie (1) est examinée par une évaluation du signal d'onde sonore reçu (E, E') par référence au signal d'onde sonore émis (S, S') en ce qui concerne la présence d'emplacements de réflexion provoquant des réflexions d'onde sonore (Sᵣ₁, Sᵣ₂, Sᵣ₃, S'ᵣ₁, S'ᵣ₂, S'ᵣ₃) le long de la tuyauterie (1),
(e) dans lequel au moins respectivement la distance (I) d'un emplacement de réflexion depuis le point d'injection est déterminée au moyen de l'évaluation du signal d'onde sonore reçu (E, E'),
**caractérisé en ce**
(f) **que** la vitesse du son (c) du mode fondamental à la température actuelle à l'intérieur de la tuyauterie (1) est établie en utilisant un signal d'onde sonore mesuré, qui présente une fréquence ou un spectre de fréquences, selon lequel le signal d'onde sonore mesuré à l'intérieur de la tuyauterie (1) est traité avec une précision suffisante en tant qu'onde sonore plane,
dans lequel, pour cela, les temps de propagation du signal d'onde sonore mesuré sont mesurés dans les deux sens sur une section préconnue (L),
(g) **que** la vitesse du son (c) ainsi établie d'une onde sonore plane est fixée identique à la vitesse du son réelle du mode fondamental à la température actuelle à l'intérieur de la tuyauterie (1), et
(h) **que** l'onde sonore ainsi déterminée est utilisée pour la détermination de la distance (I) d'un emplacement de réflexion depuis le point d'injection.

2. Procédé selon la revendication 1, **caractérisé en ce que** le signal d'onde sonore émis (S, S') est un signal à compression d'impulsions.

3. Procédé selon la revendication 2, **caractérisé en ce que**, pour l'évaluation, le signal d'onde sonore reçu (E, E') est corrélé avec le signal d'onde sonore émis (S, S'), de préférence par une transformation des deux signaux dans le domaine de fréquences complexe et par un calcul de la corrélation dans le domaine complexe, dans lequel, de préférence, des modifications aussi bien de l'amplitude que de la phase du signal d'onde sonore reçu (E, E') sont établies par rapport au signal d'onde sonore émis (S, S').

4. Procédé selon la revendication 2 ou 3, **caractérisé en ce qu'**une ou plusieurs parts réfléchies (Sᵣ₁, Sᵣ₂, Sᵣ₃, S'ᵣ₁, S'ᵣ₂, S'ᵣ₃) séparables dans le temps du signal d'onde sonore reçu (E, E') sont découpées du signal d'onde sonore reçu (E, E') avec un intervalle temporel prédéterminé et en ce qui concerne la variation temporelle et/ou la variation fréquentielle de l'amplitude et/ou de la variation fréquentielle de la phase ou en ce qui concerne l'écart entre la variation temporelle et/ou la variation fréquentielle de l'amplitude et/ou la variation fréquentielle de la phase et la variation respective du signal d'onde sonore émis (S, S') sont analysées après l'apparition de caractéristiques prédéterminées, et que, en fonction de l'apparition d'une ou de plusieurs caractéristiques prédéterminées, la part respective du signal d'onde sonore reçu (E, E') est associée à une classe générale d'emplacements de réflexion, par exemple à une bifurcation de tuyauterie (9), à un changement du diamètre de la tuyauterie, à une courbure (5) de la tuyauterie (1) ou à un obstacle à l'intérieur de la tuyauterie (1).

5. Procédé selon la revendication 4, **caractérisé en ce que**, par la classification en plus de la classe générale d'emplacements de réflexion à partir des une ou plusieurs caractéristiques prédéterminées, des informations quantitatives sont établies pour un emplacement de réflexion, telles que le diamètre (d) d'une bifurcation de tuyauterie (9), la valeur de l'augmentation ou de la diminution relative ou absolue du diamètre (D) de la tuyauterie, l'angle de courbure (5) de la tuyauterie (1) ou le type et/ou la taille de l'obstacle à l'intérieur de la tuyauterie (1).

6. Procédé selon l'une quelconque des revendications précédentes, **caractérisé en ce que** la vitesse du son c le long de la section préconnue (L) est établie selon la relation c = L/2·(t₂ + t₁)/(t₁ · t₂), dans lequel L représente la valeur de la section, t₁ le temps de propagation mesuré le long de la section (L) dans le sens aller et t₂ le temps de propagation mesuré le long de la section (L) dans le sens retour, et que la vitesse du son ainsi calculée est utilisée pour la détermination de la position des emplacements de réflexion.

7. Procédé selon la revendication 6, **caractérisé en ce que** la section préconnue (L) est parallèle à l'axe de la tuyauterie (1), est située de préférence dans ou près de l'axe de la tuyauterie (1), et que, en plus de la vitesse du son (c), également la vitesse (v) du support dans la tuyauterie (1) est établie selon la relation v = L/2·(t₂ - t₁)/(t₁ · t₂), et que, en plus de la vitesse de l'onde sonore (c), également la vitesse (v) du milieu dans la tuyauterie (1) est utilisée pour la détermination de la position des emplacements de réflexion, dans lequel la distance I_{R} d'un emplacement de réflexion depuis le point d'injection est déterminée par la relation I_{R} = t_{g}·(c² - v²)/(2 · c), dans laquelle t_{g} représente le temps de propagation total établi du signal d'onde sonore depuis le point d'injection jusqu'à l'emplacement de réflexion et d'une part réfléchie là du signal d'onde sonore reçu (E, E') revenant vers l'emplacement d'injection.

8. Procédé selon l'une quelconque des revendications précédentes, **caractérisé en ce que** le diamètre intérieur (D) de la tuyauterie (1) est établi par des mesures de distance dans au moins trois directions de détection radiales au moyen de signaux sonores qui sont émis respectivement dans une direction radiale depuis un emplacement à l'intérieur de la tuyauterie (1) et sont réfléchis par la paroi interne de la tuyauterie (1) et dont la longueur d'onde est petite par rapport au diamètre (D) de la tuyauterie (1), dans lequel chaque temps de propagation total entre l'émission du signal sonore et la réception du signal réfléchi est déterminé directement au moyen de signaux sonores de forme impulsionnelle et d'une détection de la différence de temps entre l'émission d'un signal sonore de forme impulsionnelle et la réception du signal sonore de forme impulsionnelle réfléchi respectif ou à partir du décalage de phase entre un signal sonore émis avec une durée temporelle, qui est plus grande que le temps de propagation total, et le signal sonore reçu réfléchi, et dans lequel il est déterminé au moyen de la vitesse du son les distances entre les au moins trois emplacements d'émission et de réception et, à partir de celles-ci, le diamètre intérieur (D) de la tuyauterie (1).

9. Procédé selon l'une quelconque des revendications précédentes, **caractérisé en ce que** la température et/ou le diamètre intérieur de la tuyauterie (D) sont utilisés pour la normalisation de la fréquence dans les variations fréquentielles des signaux pour la classification, en particulier la température pour la détermination de la vitesse du son et/ou le diamètre intérieur de la tuyauterie (D) pour la détermination de la fréquence limite (f_{c}) du premier mode harmonique, dans lequel la fréquence limite (f_{c}) est déterminée au moyen de la vitesse du son et du diamètre intérieur de la tuyauterie et est utilisée pour la normalisation de la fréquence.

10. Dispositif de détermination de propriétés d'une tuyauterie, en particulier de la position d'une bifurcation d'une canalisation d'eaux usées,
(a) avec une unité d'émission d'ondes sonores pour la génération d'un signal d'onde sonore émis (S, S'),
(b) dans lequel le spectre de fréquences du signal d'onde sonore émis (S, S') présente une composante de fréquence ou une zone spectrale dont la fréquence maximale est plus petite que la fréquence limite inférieure (f_{c}) du premier mode harmonique capable de se propager dans la tuyauterie (1),
(c) avec une unité de réception d'ondes sonores pour la détection des parts réfléchies (Sᵣ₁, Sᵣ₂, Sᵣ₃, S'ᵣ₁, S'ᵣ₂, S'ᵣ₃) à l'intérieur de la tuyauterie (1) du signal d'onde sonore émis (S, S') en tant que signal d'onde sonore reçu (E, E'), et
(d) une unité de commande et d'évaluation pour la commande de l'unité d'émission d'ondes sonores et pour l'évaluation du signal d'onde sonore reçu par l'unité de réception d'ondes sonores, dans lequel l'unité de commande et d'évaluation évalue le signal d'onde sonore reçu (E, E') par référence au signal d'onde sonore émis (S, S') en ce qui concerne la présence d'emplacements de réflexion provoqués par des réflexions d'onde sonore (Sᵣ₁, Sᵣ₂, Sᵣ₃, S'ᵣ₁, S'ᵣ₂, S'ᵣ₃) le long de la tuyauterie (1),
(e) dans lequel l'unité de commande et d'évaluation détermine au moyen de l'évaluation du signal d'onde sonore reçu (E, E') au moins respectivement la distance (I) entre un emplacement de réflexion et le point d'injection,
**caractérisé en ce**
(f) **que** le dispositif comprend un système de mesure de la vitesse du son (c) dans une tuyauterie (1), lequel présente deux systèmes d'émission et de réception d'ondes sonores (21, 23) prévus à une distance prédéterminée, dans lequel les unités d'émission d'ondes sonores des systèmes d'émission et de réception d'ondes sonores sont conçues pour pouvoir être commandées par l'unité de commande et d'évaluation en ce qui concerne les propriétés et/ou l'instant de l'émission d'un signal d'onde sonore mesuré et dans lequel les signaux de réception des unités de réception des systèmes d'émission et de réception d'ondes sonores sont amenés à l'unité de commande et d'évaluation aux fins d'évaluation et que l'unité de commande et d'évaluation exécute le procédé selon l'une quelconque des revendications précédentes.

11. Dispositif selon la revendication 10, **caractérisé en ce que** le système pour la mesure de la vitesse du son (c) est disposé au niveau d'un support longitudinal (25) qui est relié au niveau d'une extrémité à l'unité d'émission d'ondes sonores et à l'unité de réception d'ondes sonores du dispositif pour la détermination de propriétés d'une tuyauterie (1).

12. Dispositif selon l'une quelconque des revendications 10 ou 11, **caractérisé en ce qu'**il est prévu un système pour la mesure du diamètre intérieur (D) d'une tuyauterie (1) qui présente trois systèmes d'émission et de réception d'ondes sonores (27, 29, 31), dans lequel les unités d'émission d'ondes sonores des systèmes d'émission et de réception d'ondes sonores (27, 29, 31) sont conçues pour être commandées par l'unité de commande et d'évaluation en ce qui concerne des propriétés et/ou l'instant de l'émission d'un signal d'onde sonore mesuré et sont disposées de sorte qu'elles émettent chacune un signal d'onde sonore émis dans une direction radiale respectivement différente, et dans lequel les unités de réception d'ondes sonores des systèmes d'émission et de réception d'ondes sonores (27, 29, 31) sont conçues de sorte qu'elles reçoivent chacune le signal d'onde sonore émis réfléchi contre la paroi interne d'une tuyauterie (1) et amènent le signal de réception respectif à l'unité de commande et d'évaluation, et **en ce que** l'unité de commande et d'évaluation exécute le procédé selon l'une quelconque des revendications 8 ou 9.
